(19) Europäisches Patentamt
European Patent Office
Office européen des brevets

(11) **EP 4 557 688 A1**

(12) **EUROPEAN PATENT APPLICATION**
published in accordance with Art. 153(4) EPC

(43) Date of publication:
**21.05.2025 Bulletin 2025/21**

(21) Application number: **23845203.1**

(22) Date of filing: **29.06.2023**

(51) International Patent Classification (IPC):
**H04L 45/12** *(2022.01)*

(52) Cooperative Patent Classification (CPC):
**H04L 45/12**

(86) International application number:
**PCT/CN2023/103818**

(87) International publication number:
**WO 2024/021990 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.07.2022 CN 202210891496**

(71) Applicant: **Huawei Technologies Co., Ltd.
Shenzhen, Guangdong 518129 (CN)**

(72) Inventors:
• **SHAN, Liang
Shenzhen, Guangdong 518129 (CN)**
• **WEN, Huafeng
Shenzhen, Guangdong 518129 (CN)**
• **WU, Tao
Shenzhen, Guangdong 518129 (CN)**
• **LI, Jun
Shenzhen, Guangdong 518129 (CN)**
• **WU, Qinzhi
Shenzhen, Guangdong 518129 (CN)**
• **WANG, Bingquan
Shenzhen, Guangdong 518129 (CN)**
• **GONG, Xiangyu
Shenzhen, Guangdong 518129 (CN)**

(74) Representative: **Gill Jennings & Every LLP
The Broadgate Tower
20 Primrose Street
London EC2A 2ES (GB)**

(54) **PATH DETERMINATION METHOD AND RELATED DEVICE**

(57) This application provides a path determining method and a related device, to improve data flow forwarding efficiency. In the method, after obtaining first topology information including connection relationships between N second network devices and P third network devices, and obtaining communication relationships of M data flows, a first network device determines M paths based on the communication relationships of the M data flows and the first topology information, and sends the M paths to the N second network devices. Then, the N second network devices may separately send the M data flows to the P third network devices based on the M paths. Therefore, by comparison with an implementation in which a path conflict is easily caused because the N second network devices determine paths only based on local data flows, in the method, the first network device can determine the paths based on global information, to avoid a path conflict and improve data flow forwarding efficiency.

```
┌─────────────┐                    ┌──────────────┐
│First network│                    │  N second    │
│   device    │                    │network devices│
└─────────────┘                    └──────────────┘
       │                                   │
┌──────────────────────────────────┐       │
│S301: Obtain first topology information│   │
└──────────────────────────────────┘       │
┌──────────────────────────────────┐       │
│S302: Obtain communication        │       │
│relationships of M data flows     │       │
└──────────────────────────────────┘       │
┌──────────────────────────────────┐       │
│S303: Determine M paths based on the│     │
│communication relationships of the M│     │
│data flows and the first topology   │     │
│information                         │     │
└──────────────────────────────────┘       │
       │         S304: M paths             │
       │─────────────────────────────────>│
```

FIG. 3

EP 4 557 688 A1

## Description

This application claims priority to Chinese Patent Application No. 202210891496.0, filed with the China National Intellectual Property Administration on July 27, 2022 and entitled "PATH DETERMINING METHOD AND RELATED DEVICE", which is incorporated herein by reference in its entirety.

## TECHNICAL FIELD

This application relates to the communication field, and in particular, to a path determining method and a related device.

## BACKGROUND

In a communication network, when there is no direct link between different communication apparatuses, a data flow exchanged between the different communication apparatuses needs to be forwarded by another communication apparatus. The another communication apparatus may be referred to as a forwarding device. For example, the forwarding device may include a router, a switch, or a virtual machine.

Currently, as a networking scale becomes larger, a data flow can be exchanged between different communication apparatuses only after the data flow is forwarded by a multi-layer network. However, in the multi-layer network, there are usually a plurality of paths between a communication apparatus corresponding to a source address of the data flow and a communication apparatus corresponding to a destination address of the data flow. When forwarding the data flow, a communication apparatus serving as a forwarding device selects a path from the plurality of paths according to a local policy, and forwards the data flow based on the locally selected path.

However, in the multi-layer network, there are usually a plurality of communication apparatuses serving as forwarding devices, and each communication apparatus serving as a forwarding device determines a path based on a local data flow of the communication apparatus. Consequently, a conflict easily occurs between paths determined by different forwarding devices, and data flow forwarding efficiency is affected.

## SUMMARY

This application provides a path determining method and a related device, to improve data flow forwarding efficiency.

A first aspect of this application provides a path determining method. The method is performed by a first network device, the method is performed by some components (for example, a processor, a chip, or a chip system) of the first network device, or the method may be implemented by a logical module or software that can implement all or some functions of the first network device. In the first aspect and possible implementations of the first aspect, an example in which the method is performed by the first network device is used for description. The first network device may be a router, a switch, a virtual machine, or the like. In the method, the first network device obtains first topology information, where the first topology information includes connection relationships between N second network devices and P third network devices, any second network device is an upstream network device of any third network device, N is an integer greater than or equal to 2, and P is an integer greater than or equal to 1. The first network device obtains communication relationships of M data flows, where a communication relationship of each of the M data flows includes source address information and destination address information, M is an integer greater than or equal to 2, and the M data flows are separately transmitted by the N second network devices to the P third network devices. The first network device determines M paths based on the communication relationships of the M data flows and the first topology information, where the M paths respectively correspond to the M data flows, and the M paths indicate paths through which the M data flows are transmitted by the N second network devices to the P third network devices. The first network device separately sends the M paths to the N second network devices.

According to the foregoing technical solution, after obtaining the first topology information including the connection relationships between the N second network devices and the P third network devices, and obtaining the communication relationships of the M data flows, the first network device determines the M paths based on the communication relationships of the M data flows and the first topology information, and sends the M paths to the N second network devices. Then, the N second network devices may separately send the M data flows to the P third network devices based on the M paths. In other words, the first network device serves as a device for determining a path, and the path is determined by the first network device based on the connection relationships between the N second network devices and the P third network devices, and the communication relationships of the M data flows. Therefore, by comparison with an implementation in which a path conflict is easily caused because the N second network devices determine paths only based on local data flows, in the foregoing method, the first network device can determine the paths based on global information, to avoid a path conflict and improve data flow forwarding efficiency.

It should be understood that any one of the M data flows may be a unidirectional data flow, or may be a bidirectional data flow. This is not limited in this application. If a data flow in the M data flows is the bidirectional data flow, in the communication relationships of the M data flows, a communication relationship of the bidirectional data flow may include only source address information and destination address information of a flow direction, or a communication relationship of the bidirectional data flow may include source address information and destination address information corresponding to each of two flow directions. This is not limited herein.

In a possible implementation of the first aspect, the M data flows are transmitted by the P third network devices to K fourth network devices, where K is an integer greater than or equal to 1. The M data flows include a first data flow and a second data flow, where source address information of the first data flow and source address information of the second data flow correspond to different second network devices, and destination address information of the first data flow and destination address information of the second data flow correspond to a same fourth network device; and the M paths include a first path and a second path, where the first path corresponds to the first data flow, the second path corresponds to the second data flow, and the first path and the second path correspond to different third network devices.

Optionally, any fourth network device is different from any second network device.

Optionally, at least one of the N second network devices and at least one of the K fourth network devices are a same network device.

Optionally, N is equal to K, and the N second network devices and the K fourth network devices are a same network device.

According to the foregoing technical solution, the M paths determined by the first network device include the first path corresponding to the first data flow and the second path corresponding to the second data flow, and the first path and the second path correspond to the different third network devices, where the source address information of the first data flow and the source address information of the second data flow correspond to the different second network devices, and the destination address information of the first data flow and the destination address information of the second data flow correspond to the same fourth network device. In other words, because any fourth network device is a downstream network device of any third network device, after the first data flow and the second data flow are separately sent by different second network devices to different third network devices, the different third network devices separately send the first data flow and the second data flow to a same fourth network device. This can avoid network congestion generated in a process in which data flows from different second network devices are transmitted by a same third network device and then transmitted by the same third network device to a same fourth network device, to improve transmission efficiency of the first data flow and the second data flow.

In a possible implementation of the first aspect, the M paths further indicate egress ports of the M data flows on the N second network devices.

According to the foregoing technical solution, in addition to indicating the paths through which the M data flows are transmitted by the N second network devices to the P third network devices, the M paths determined by the first network device further indicate the egress ports of the M data flows on the N second network devices, so that the N second network devices can determine, after receiving the M paths, the egress ports for sending the M data flows.

In a possible implementation of the first aspect, the M data flows include a third data flow and a fourth data flow, where source address information of the third data flow and source address information of the fourth data flow correspond to a same second network device; and the M paths include a third path and a fourth path, where the third path corresponds to the third data flow, the fourth path corresponds to the fourth data flow, and the third path is different from the fourth path.

According to the foregoing technical solution, the M paths determined by the first network device include the third path corresponding to the third data flow and the fourth path corresponding to the fourth data flow, and the third path is different from the fourth path. The source address information of the third data flow and the source address information of the fourth data flow correspond to the same second network device. In other words, the third data flow and the fourth data flow are separately transmitted by the same second network device through different paths. This can avoid network congestion generated in a process in which data flows from a same second network device are transmitted through a same path, to improve transmission efficiency of the third data flow and the fourth data flow.

In a possible implementation of the first aspect, the M data flows are transmitted by the P third network devices to the K fourth network devices, where K is a positive integer. That the first network device determines M paths based on the communication relationships of the M data flows and the first topology information includes: The first network device determines a first mapping relationship based on the communication relationships of the M data flows and the first topology information, where the first mapping relationship indicates a mapping relationship between a second network device corresponding to the source address information of each of the M data flows and a fourth network device corresponding to the destination address information of each of the M data flows. The first network device determines the M paths based on the first mapping relationship.

Optionally, the topology information further includes connection relationships between the P third network devices and the K fourth network devices.

According to the foregoing technical solution, an implementation in which the first network device determines the M paths is provided, so that the first network device determines the M paths based on mapping relationships between the N second network devices and the K fourth network devices.

In a possible implementation of the first aspect, that the first network device determines the M paths based on the first mapping relationship includes: The first network device determines first sorting information based on the first mapping relationship, where the first sorting information indicates sorting of a quantity of second network devices corresponding to the K fourth network devices. The first network device sequentially traverses the egress ports on the N second network devices based on the first sorting information, to obtain a second mapping relationship, where the second mapping relationship indicates mapping relationships between the egress ports on the N second network devices and the K fourth network devices. The first network device determines the M paths based on the second mapping relationship.

According to the foregoing technical solution, an implementation in which the first network device determines the M paths is provided, so that the first network device determines the M paths based on the first mapping relationship, the first sorting information, and the second mapping relationship that are sequentially determined.

In a possible implementation of the first aspect, that the first network device sequentially traverses the egress ports on the N second network devices based on the first sorting information, to obtain a second mapping relationship includes: The first network device sequentially traverses the egress ports on the N second network devices based on the first sorting information, to obtain a third mapping relationship, where the third mapping relationship indicates an optional quantity of egress ports on the second network device corresponding to each fourth network device. The first network device determines the second mapping relationship based on the third mapping relationship.

According to the foregoing technical solution, the third mapping relationship indicates the optional quantity of egress ports on the second network device corresponding to each fourth network device. A larger value of the optional quantity indicates smaller uncertainty of a corresponding optional path of the fourth network device. On the contrary, a smaller value of the optional quantity indicates greater uncertainty of a corresponding optional path of the fourth network device. Therefore, the second mapping relationship determined based on the third mapping relationship can be preferentially for traversing egress ports on the second network device corresponding to a fourth network device with an optional path of small uncertainty, to improve accuracy of the solution, and avoid a conflict between the M paths subsequently determined based on the second mapping relationship.

In a possible implementation of the first aspect, the method further includes: The first network device obtains second topology information, where the second topology information includes connection relationships between A second network devices and the P third network devices, at least one of the A second network devices is the same as the at least one of the N second network devices, and A is an integer greater than or equal to 1. The first network device obtains communication relationships of B data flows, where a communication relationship of each of the B data flows includes source address information and destination address information, and B is an integer greater than or equal to 1; and the B data flows are separately transmitted by the A second network devices to the P third network devices. After the first network device determines the M paths based on the communication relationships of the M data flows and the topology information, the method further includes: The first network device determines B paths based on the communication relationship of the B data flows and the topology information, where the B paths respectively correspond to the B data flows, and the B paths indicate paths through which the M data flows are sent by the A second network devices to the P third network devices, where egress ports that are on a second network device and that correspond to the B paths are different from egress ports that are on a second network device and that correspond to the M paths. The first network device separately sends the B paths to the A second network devices.

According to the foregoing technical solution, the egress ports that are on the second network device and that correspond to the B paths determined by the first network device are different from the egress ports that are on the second network device and that correspond to the M paths, to avoid a flow conflict generated when the M data flows and the B data flows correspond to an egress port on a same second network device, and improve data transmission efficiency of the M data flows and the B data flows.

In a possible implementation of the first aspect, that the first network device obtains communication relationships of M data flows includes: The first network device separately receives communication relationships that are of the M data flows and that are from the N second network devices.

According to the foregoing technical solution, the first network device may obtain the communication relationships of the M data flows in a manner of separately receiving the communication relationships that are of the M data flows and that are from the N second network devices, so that the first network device obtains the communication relationships of the M data flows in a manner of interaction between the first network device and the N second network devices.

Optionally, the communication relationships of the M data flows are preconfigured in the first network device, to avoid overhead and latency increase caused by interaction between different network devices.

In a possible implementation of the first aspect, the M data flows correspond to one of a plurality of artificial intelligence (artificial intelligence, AI) set communication tasks.

Optionally, the M data flows correspond to a long steady-state flow task, and a flow volume of a data flow in the long steady-state flow task is greater than a preset threshold within specific duration.

In a possible implementation of the first aspect, the first network device is a controller or one of the P third network devices.

According to the foregoing technical solution, the first network device that performs the method to determine and send the M paths may be the controller, or may be one of the P third network devices, to improve flexibility of implementing the solution.

A second aspect of this application provides a path determining method. The method is performed by a second network device, the method is performed by some components (for example, a processor, a chip, or a chip system) of the second network device, or the method may be implemented by a logical module or software that can implement all or some functions of the second network device. In the second aspect and possible implementations of the second aspect, an example in which the method is performed by the second network device is used for description. The second network device may be a router, a switch, a virtual machine, or the like. In the method, the second network device sends communication relationships of Q data flows to a first network device, where a communication relationship of each of the Q data flows includes source address information and destination address information, and Q is an integer greater than or equal to 1. The second network device receives Q paths from the first network device, where the Q paths indicate paths used when the second network device transmits the Q data flows. The second network device transmits the Q data flows based on the Q paths.

According to the foregoing technical solution, after sending the communication relationships of the Q data flows to the first network device, the second network device receives the Q paths that are used when the second network device is indicated to transmit the Q data flows and that are from the first network device, and the second network device transmits the Q data flows based on the Q paths. In other words, serving as a device for determining a path, the first network device can determine M paths corresponding to M data flows transmitted between N second network devices and P third network devices. Therefore, by comparison with an implementation in which a path conflict is easily caused because the N second network devices determine paths only based on local data flows, in the foregoing method, the first network device can determine the paths based on global information, to avoid a path conflict and improve data flow forwarding efficiency.

It should be understood that any one of the Q data flows may be a unidirectional data flow, or may be a bidirectional data flow. This is not limited in this application. If a data flow in the Q data flows is the bidirectional data flow, in the communication relationships of the Q data flows, a communication relationship of the bidirectional data flow may include only source address information and destination address information of a flow direction, or a communication relationship of the bidirectional data flow may include source address information and destination address information corresponding to each of two flow directions. This is not limited herein.

In a possible implementation of the second aspect, path information further indicates egress ports that are on the second network device and that are of the Q data flows.

According to the foregoing technical solution, in addition to indicating the paths through which the Q data flows are transmitted by the second network device, the Q paths received by the second network device further indicate the egress ports that are on the second network device and that are of the Q data flows, so that the second network device can determine, after receiving the Q paths, egress ports for sending the Q data flows.

In a possible implementation of the second aspect, the Q data flows include a third data flow and a fourth data flow, where source address information of the third data flow and source address information of the fourth data flow correspond to the second network device; and the path information includes a third path and a fourth path, where the third path corresponds to the third data flow, the fourth path corresponds to the fourth data flow, and the third path is different from the fourth path.

According to the foregoing technical solution, the Q paths received by the second network device include the third path corresponding to the third data flow and the fourth path corresponding to the fourth data flow, and the third path is different from the fourth path. The source address information of the third data flow and the source address information of the fourth data flow correspond to a same second network device. In other words, the third data flow and the fourth data flow are separately transmitted by the same second network device through different paths. This can avoid network congestion generated in a process in which data flows from a same second network device are transmitted through a same path, to improve transmission efficiency of the third data flow and the fourth data flow.

In a possible implementation of the second aspect, the Q data flows correspond to one of a plurality of AI set communication tasks.

Optionally, the Q data flows correspond to a long steady-state flow task, and a flow volume of a data flow in the long steady-state flow task is greater than a preset threshold within specific duration.

A third aspect of this application provides a communication apparatus. The apparatus can implement the method according to any one of the first aspect or the possible implementations of the first aspect. The apparatus includes a corresponding unit or module configured to perform the method. The unit or module included in the apparatus may be implemented by software and/or hardware. For example, the apparatus may be a first network device, the apparatus may be a component (for example, a processor, a chip, or a chip system) in the first network device, or the apparatus may be a logical module or software that can implement all or some functions of the first network device.

The apparatus includes a transceiver unit and a processing unit. The transceiver unit is configured to obtain first topology information, where the first topology information includes connection relationships between N second network devices and P third network devices, any second network device is an upstream network device of any third network device, N is an integer greater than or equal to 2, and P is an integer greater than or equal to 1. The transceiver unit is further configured to obtain communication relationships of M data flows, where a communication relationship of each of the M data flows includes source address information and destination address information, M is an integer greater than or equal to 2, and the M data flows are separately transmitted by the N second network devices to the P third network devices. The processing unit is configured to determine M paths based on the communication relationships of the M data flows and the first topology information, where the M paths respectively correspond to the M data flows, and the M paths indicate paths through which the M data flows are transmitted by the N second network devices to the P third network devices. The transceiver unit is further configured to separately send the M paths to the N second network devices.

In a possible implementation of the third aspect, the M data flows are transmitted by the P third network devices to K fourth network devices, where K is an integer greater than or equal to 1. The M data flows include a first data flow and a second data flow, where source address information of the first data flow and source address information of the second data flow correspond to different second network devices, and destination address information of the first data flow and destination address information of the second data flow correspond to a same fourth network device; and the M paths include a first path and a second path, where the first path corresponds to the first data flow, the second path corresponds to the second data flow, and the first path and the second path correspond to different third network devices.

In a possible implementation of the third aspect, the M paths further indicate egress ports of the M data flows on the N second network devices.

In a possible implementation of the third aspect, the M data flows include a third data flow and a fourth data flow, where source address information of the third data flow and source address information of the fourth data flow correspond to a same second network device; and the M paths include a third path and a fourth path, where the third path corresponds to the third data flow, the fourth path corresponds to the fourth data flow, and the third path is different from the fourth path.

In a possible implementation of the third aspect, the M data flows are transmitted by the P third network devices to the K fourth network devices, where K is a positive integer. The processing unit is specifically configured to: determine a first mapping relationship based on the communication relationships of the M data flows and the first topology information, where the first mapping relationship indicates a mapping relationship between a second network device corresponding to the source address information of each of the M data flows and a fourth network device corresponding to the destination address information of each of the M data flows; and determine the M paths based on the first mapping relationship.

In a possible implementation of the third aspect, the processing unit is specifically configured to: determine first sorting information based on the first mapping relationship, where the first sorting information indicates sorting of a quantity of second network devices corresponding to the K fourth network devices; sequentially traverse the egress ports on the N second network devices based on the first sorting information, to obtain a second mapping relationship, where the second mapping relationship indicates mapping relationships between the egress ports on the N second network devices and the K fourth network devices; and determine the M paths based on the second mapping relationship.

In a possible implementation of the third aspect, the processing unit is specifically configured to: sequentially traverse the egress ports on the N second network devices based on the first sorting information, to obtain a third mapping relationship, where the third mapping relationship indicates an optional quantity of egress ports on the second network device corresponding to each fourth network device; and determine the second mapping relationship based on the third mapping relationship.

In a possible implementation of the third aspect, the transceiver unit is further configured to obtain second topology information, where the second topology information includes connection relationships between A second network devices and the P third network devices, at least one of the A second network devices is the same as at least one of the N second network devices, and A is an integer greater than or equal to 1. The transceiver unit is further configured to obtain communication relationships of B data flows, where a communication relationship of each of the B data flows includes source address information and destination address information, and B is an integer greater than or equal to 1; and the B data flows are separately transmitted by the A second network devices to the P third network devices. The processing unit is further configured to determine B paths based on the communication relationship of the B data flows and the topology information, where the B paths respectively correspond to the B data flows, the B paths indicate paths through which the M data flows are sent by the A second network devices to the P third network devices, where egress ports that are on a second network device and that correspond to the B paths are different from egress ports that are on a second network device and that correspond to the M paths. The transceiver unit is further configured to separately send the B paths to the A second network devices.

In a possible implementation of the third aspect, the transceiver unit is specifically configured to separately receive communication relationships that are of the M data flows and that are from the N second network devices.

In a possible implementation of the third aspect, the M data flows correspond to one of a plurality of artificial intelligence AI set communication tasks.

In a possible implementation of the third aspect, the first network device is a controller or one of the P third network devices.

In the third aspect of this application, composition modules of the communication apparatus may be further configured to: perform a step performed in the possible implementations of the first aspect; and implement a corresponding technical effect. For details, refer to the first aspect. Details are not described herein again.

A fourth aspect of this application provides a communication apparatus. The apparatus can implement the method according to any one of the second aspect or the possible implementations of the second aspect. The apparatus includes a corresponding unit or module configured to perform the method. The unit or module included in the apparatus may be implemented by software and/or hardware. For example, the apparatus may be a second network device, the apparatus may be a component (for example, a processor, a chip, or a chip system) in the second network device, or the apparatus may be a logical module or software that can implement all or some functions of the second network device.

The apparatus includes a transceiver unit and a processing unit. The processing unit is configured to determine communication relationships of Q data flows, where a communication relationship of each of the Q data flows includes source address information and destination address information, and Q is an integer greater than or equal to 1. The transceiver unit is configured to send the communication relationships of the Q data flows to a first network device. The transceiver unit is further configured to receive Q paths from the first network device, where the Q paths indicate paths used when the second network device transmits the Q data flows. The transceiver unit is further configured to transmit the Q data flows based on the Q paths.

In a possible implementation of the fourth aspect, path information further indicates egress ports that are on the second network device and that are of the Q data flows.

In a possible implementation of the fourth aspect, the Q data flows include a third data flow and a fourth data flow, where source address information of the third data flow and source address information of the fourth data flow correspond to the second network device; and the path information includes a third path and a fourth path, where the third path corresponds to the third data flow, the fourth path corresponds to the fourth data flow, and the third path is different from the fourth path.

In a possible implementation of the fourth aspect, the Q data flows correspond to one of a plurality of artificial intelligence AI set communication tasks.

In the fourth aspect of this application, composition modules of the communication apparatus may be further configured to: perform a step performed in the possible implementations of the second aspect; and implement a corresponding technical effect. For details, refer to the second aspect. Details are not described herein again.

A fifth aspect of this application provides a communication apparatus. The communication apparatus includes at least one processor. The at least one processor is coupled to a memory. The memory is configured to store a program or instructions. The at least one processor is configured to execute the program or the instructions, to enable the apparatus to implement the method according to any one of the first aspect or the possible implementations of the first aspect, or to enable the apparatus to implement the method according to any one of the second aspect or the possible implementations of the second aspect.

A sixth aspect of this application provides a communication apparatus, including at least one logic circuit and an input/output interface. The logic circuit is configured to perform the method according to any one of the first aspect or the possible implementations of the first aspect, or the logic circuit is configured to perform the method according to any one of the second aspect or the possible implementations of the second aspect.

A seventh aspect of this application provides a computer-readable storage medium, configured to store computer instructions. When the computer instructions are executed by a processor, the processor performs the method according to any one of the first aspect or the possible implementations of the first aspect, or the processor performs the method according to any one of the second aspect or the possible implementations of the second aspect.

An eighth aspect of this application provides a computer program product (or referred to as a computer program). The computer program product includes instructions. When the instructions in the computer program product are executed by a processor, the processor performs the method according to any one of the first aspect or the possible implementations of the first aspect, or the processor performs the method according to any one of the second aspect or the possible implementations of the second aspect.

A ninth aspect of this application provides a chip system. The chip system includes at least one processor, configured to support a communication apparatus in implementing a function according to any one of the first aspect or the possible implementations of the first aspect, or configured to support a communication apparatus in implementing a function according to any one of the second aspect or the possible implementations of the second aspect.

In a possible design, the chip system may further include a memory. The memory is configured to store program instructions and data that are necessary for the communication apparatus. The chip system may include a chip, or may include a chip and another discrete component. Optionally, the chip system further includes an interface circuit. The interface circuit provides program instructions and/or data for the at least one processor.

A tenth aspect of this application provides a communication system. The communication system includes the first network device according to any one of the foregoing aspects.

Optionally, the communication system includes one or more second network devices according to any one of the foregoing aspects.

Optionally, the communication system includes one or more third network devices according to any one of the foregoing aspects.

Optionally, the communication system includes one or more fourth network devices according to any one of the foregoing aspects.

For technical effects brought by any one of the designs of the second aspect to the tenth aspect, refer to the technical effects brought by the different implementations of the first aspect. Details are not described herein again.

## BRIEF DESCRIPTION OF DRAWINGS

FIG. 1a is a schematic diagram of a communication system according to this application;
FIG. 1b is another schematic diagram of a communication system according to this application;
FIG. 1c is another schematic diagram of a communication system according to this application;
FIG. 1d is another schematic diagram of a communication system according to this application;
FIG. 1e is another schematic diagram of a communication system according to this application;
FIG. 1f is another schematic diagram of a communication system according to this application;
FIG. 2a is a schematic diagram of a communication scenario according to this application;
FIG. 2b is another schematic diagram of a communication scenario according to this application;
FIG. 2c is another schematic diagram of a communication scenario according to this application;
FIG. 2d is another schematic diagram of a communication scenario according to this application;
FIG. 2e is another schematic diagram of a communication scenario according to this application;
FIG. 2f is another schematic diagram of a communication scenario according to this application;
FIG. 2g is another schematic diagram of a communication scenario according to this application;
FIG. 3 is a schematic diagram of a path determining method according to this application;
FIG. 4a-1 and FIG. 4a-2 are another schematic diagram of a path determining method according to this application;

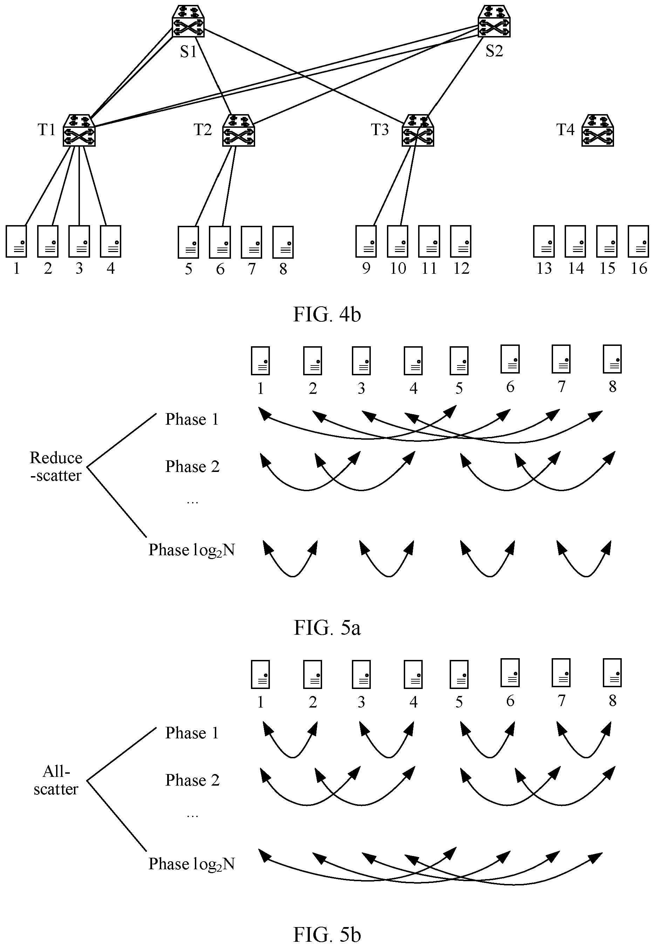

FIG. 4b is another schematic diagram of a path determining method according to this application;
FIG. 5a is a schematic diagram of an AI set communication process according to this application;
FIG. 5b is another schematic diagram of an AI set communication process according to this application;

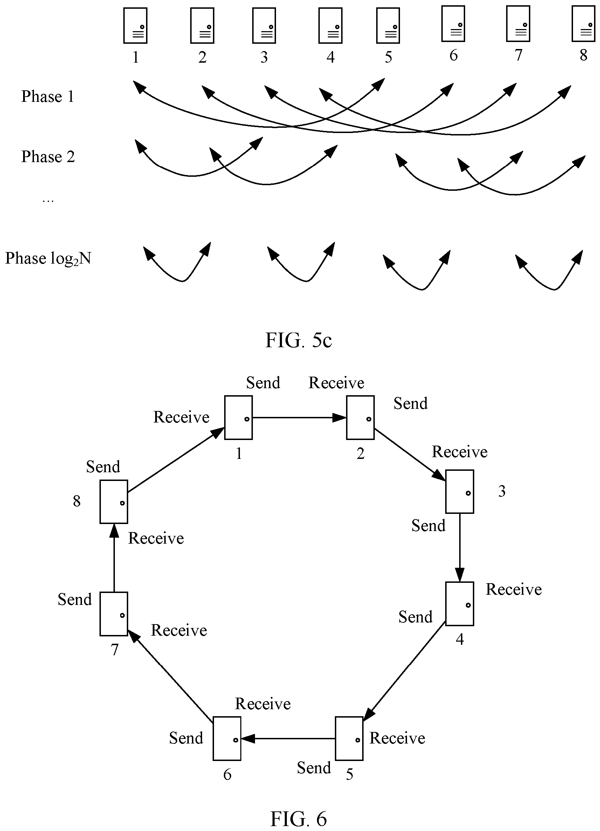

FIG. 5c is another schematic diagram of an AI set communication process according to this application;
FIG. 6 is another schematic diagram of an AI set communication process according to this application;

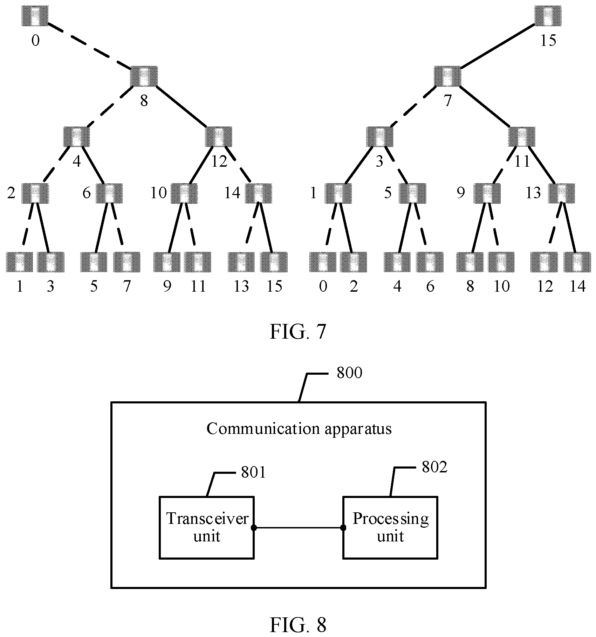

FIG. 7 is another schematic diagram of an AI set communication process according to this application;
FIG. 8 is a schematic diagram of a communication apparatus according to this application; and

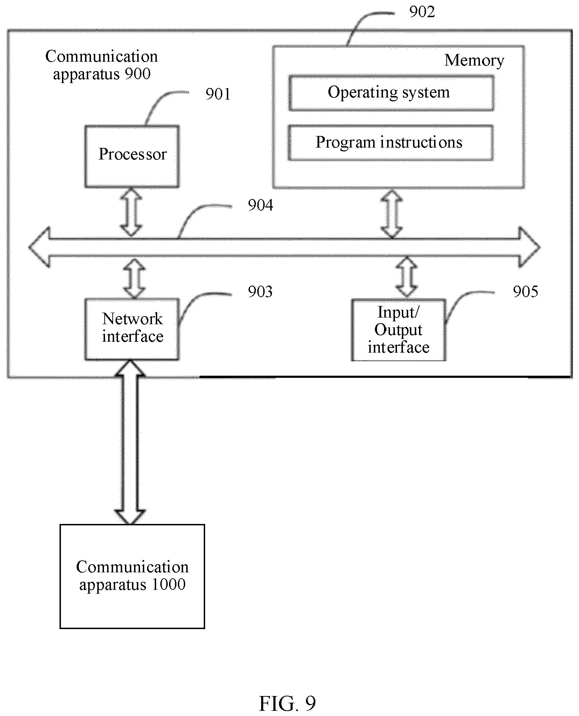

FIG. 9 is another schematic diagram of a communication apparatus according to this application.

## DESCRIPTION OF EMBODIMENTS

The following describes the technical solutions in embodiments of the present invention with reference to the accompanying drawings in embodiments of the present invention.

The terms "system" and "network" may be used interchangeably in embodiments of this application. "At least one" means one or more, and "a plurality of" means two or more than two. "And/or" describes an association relationship of associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

It should be noted that in this application, the term such as "example" or "for example" is used to represent giving an example, an illustration, or a description. Any embodiment or design scheme described as "example" or "for example" in this application should not be explained as being more preferred or having more advantages than another embodiment or design scheme. Exactly, use of the term "example", "for example", or the like is intended to present a related concept in a specific manner.

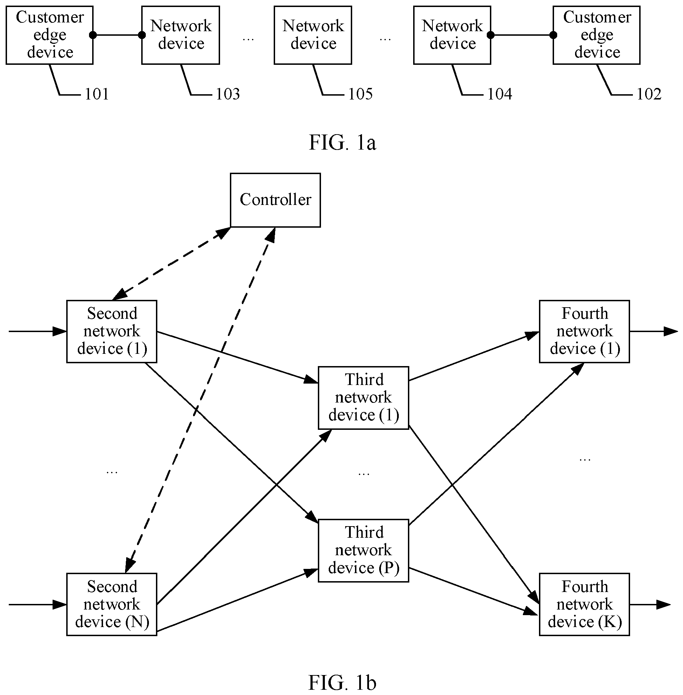

In a communication network, when there is no direct link between different communication apparatuses, a data flow exchanged between the different communication apparatuses needs to be forwarded by another communication apparatus. The another communication apparatus may be referred to as a forwarding device. For example, the forwarding device may include a router, a switch, a virtual machine, or the like. The following describes a communication system in this application with reference to implementation examples in FIG. 1a to FIG. 1c.

FIG. 1a is a schematic diagram of an architecture of a communication system according to an embodiment of this application. As shown in FIG. 1a, the system includes a plurality of customer edge (customer edge, CE) devices, such as a customer edge device 101 and a customer edge device 102, and another customer edge device that may exist. The system further includes a plurality of network devices, such as a network device 103, a network device 104, and a network device 105, and another network device that may exist.

In FIG. 1a, the customer edge device may serve as an ingress device of a data flow transmitted in the communication system. In this case, the customer edge device may be connected to a transmit end of the data flow, that is, a device indicated by source address information of the data flow. Alternatively, the customer edge device may serve as an egress device of a data flow transmitted in the communication system. In this case, the customer edge device may be connected to a receive end of the data flow, that is, a device indicated by destination address information of the data flow. The transmit end of the data flow or the receive end of the data flow may be a device, such as a terminal device, a server, or a virtual machine, that has a data receiving and sending requirement.

Optionally, in FIG. 1a, the network device 103, the network device 104, and the network device 105 are devices such as routers (routers), switches (switches), and virtual machines. The network devices may be configured to transmit a data flow from a customer edge device to another customer edge device.

Optionally, the customer edge device may be referred to as an edge switching device.

The implementation scenario in FIG. 1a is used as an example. As a networking scale becomes larger, a data flow can be exchanged between different communication apparatuses only after the data flow is forwarded by a multi-layer network. In other words, different network devices in FIG. 1a may be networked into the multi-layer network. The following describes, with reference to some implementation examples, a multi-layer network in a communication scenario provided in this application.

An implementation example is shown in FIG. 1b. A direction of an arrow in the figure is a flow direction of a data flow. After sequentially flowing from a source device indicated by source address information of the data flow to N (where N is an integer greater than or equal to 2) second network devices, P (where P is an integer greater than or equal to 1, and in the figure, an example in which P is greater than or equal to 2 is used) third network devices, and K (where K is an integer greater than or equal to 2) fourth network devices, the data flow is received by a destination device indicated by destination address information. It can be learned from the flow direction of the data flow in FIG. 1b that the N second network devices are upstream devices of the P third network devices, and correspondingly, the P third network devices may also be referred to as downstream devices of the N second network devices. Similarly, the P third network devices are upstream devices of the K fourth network devices, and correspondingly, the K fourth network devices may also be referred to as downstream devices of the P third network devices.

Optionally, in a scenario example shown in FIG. 1b, a controller connected to each second network device may be further included. A path determining method provided in this application may be performed by the controller, or may be performed by any third network device.

In addition, considering complexity of a network, both a source device of a data flow and a destination device of the data flow may be connected to a same network device, both a source device of a data flow and a destination device of another data flow may be connected to a same network device, a source device of a data flow and a destination device of the data flow may not be connected to a same network device, or a source device of a data flow and a destination device of another data flow may not be connected to a same network device. In other words, the N second network devices may be completely different from the K fourth network devices, or the N second network devices may be partially the same as or completely the same as the K fourth network devices. The following provides further descriptions with reference to more implementation examples.

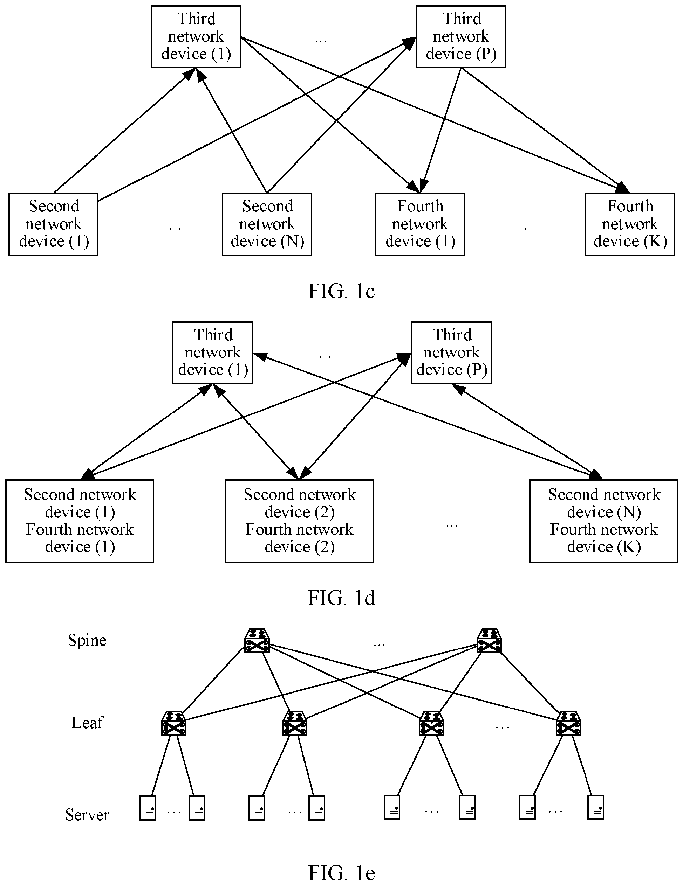

An implementation example is shown in FIG. 1c. N second network devices are completely different from K fourth network devices, in other words, any fourth network device is different from any second network device.

Another implementation example is shown in FIG. 1d. A value of N is equal to a value of K, and N second network devices are completely the same as K fourth network devices.

Optionally, a multi-layer network including the N second network devices, P third network devices, and the K fourth network devices may be a three-layer network including an access layer, an aggregation layer, and a core layer. Alternatively, the multi-layer network may be a two-layer network including a spine (Spine) node and a leaf (Leaf) node, or may be another implementation. This is not limited in this application.

In FIG. 1e, an example in which the foregoing multi-layer network is the two-layer network including the spine node and the leaf node is used. In FIG. 1e, an example in which N second network devices are completely the same as K fourth network devices is used for description. The leaf node may be connected to one or more servers (Servers), and data flows exchanged between different servers may be forwarded by the leaf node. When two servers are connected to a same leaf node, a data flow between the two servers can be exchanged through forwarding of the same leaf node. When two servers are connected to different leaf nodes, a data flow between the two servers can be exchanged only through forwarding of leaf nodes and spine nodes that are connected to the two servers.

It should be noted that for ease of description, a communication process between two layers of networks is mainly described in the following embodiments. In actual application of the solution, the following embodiments may be further applied to a communication process between any two networks in another network. For example, for a three-layer network including an access layer, an aggregation layer, and a core layer, the following embodiments may be applied to a network between the access layer and the aggregation layer, may be applied to a network between the aggregation layer and the core layer, or may be applied to a network between the access layer and the core layer.

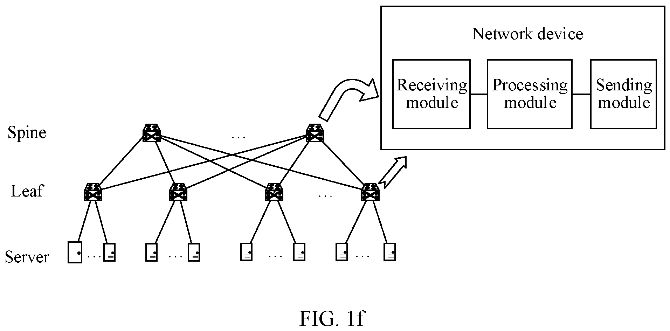

In FIG. 1f, an example in which the foregoing multi-layer network is the two-layer network including the spine node and the leaf node is still used herein. An implementation process of the following embodiments mainly relates to improvement of at least one of a receiving module configured to receive data, a processing module configured to locally process data, and a sending module configured to send data that are in a network device (for example, the spine node and the leaf node).

An example in which the foregoing multi-layer network is a data center network is used. With leapfrog development of new technologies such as cloud computing, 5G, big data, an internet of things, and AI, and mature commercial use of applications such as autonomous vehicles, 5G smart manufacturing factories, intelligent risk control, and facial recognition, a requirement for a network of a data center becomes higher, and the data center is required to provide a lossless network with no packet loss, a high throughput, and low latency. As services on the network of the data center are increasingly enriched, a networking scale becomes larger. Therefore, the network of the data center usually uses a multi-root hierarchical network topology. An equal-cost member link exists between switching devices at different layers. In an internet protocol (internet protocol, IP) network, a plurality of different links reach a network environment of a same destination address. When a plurality of routes have same route priorities and same route metrics, the routes are referred to as equal-cost routes, and form an equal-cost multi-path (Equal-Cost Multi-Path, ECMP). A device at a multi-path bifurcation location selects a path according to a specific policy and sends packets to different paths to implement flow load balancing. In an ECMP mechanism, a feature field (for example, a source media access control (media access control, MAC) address, a destination MAC address, and IP 5-tuple information) of a data packet serves as a hash factor, a hash-key (HASH-KEY) value is generated by using a hash (HASH) algorithm, and then a member link is selected from load balancing links based on the hash-key value to forward the data packet. In this case, data packets with different feature fields may have different hash-key values, and therefore different member links may be selected for forwarding. Data packets with same feature fields may have same hash-key values, and therefore same member links are selected for forwarding. In this way, load balancing forwarding is performed on different data flows through different member links, and a time sequence of data packets in a same data flow reaching a receive end is ensured.

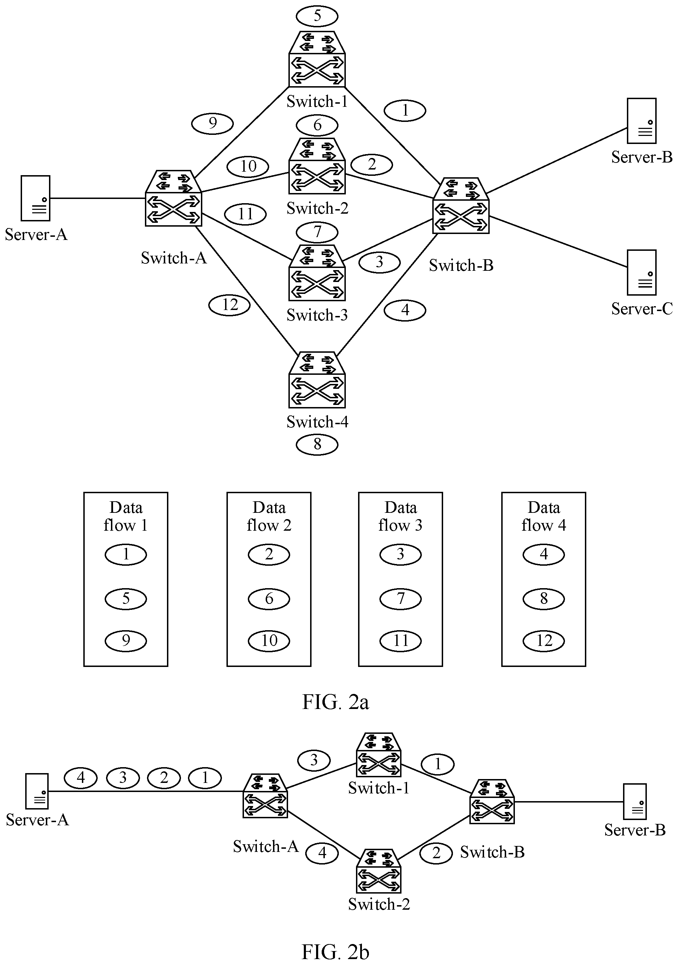

In other words, in the foregoing multi-layer network, there are usually a plurality of paths between a communication apparatus corresponding to a source address of a data flow and a communication apparatus corresponding to a destination address of the data flow. When forwarding the data flow, a communication apparatus, serving as a forwarding device, selects a path from the plurality of paths according to a local policy, and forwards the data flow based on the locally selected path. The following uses the architecture shown in FIG. 1b as an example for example descriptions of an implementation process of determining a path based on local selection with reference to implementation examples in FIG. 2a to FIG. 2g.

As shown in FIG. 2a, when a server A (a Server-A) needs to separately communicate with a server B (a Server-B) and a server C (a Server-C), a multi-layer network including a switching device A (a Switch-A), a switching device B (a Switch-B), a switching device 1 (a Switch-1), a switching device 2 (a Switch-2), a switching device 3 (a Switch-3), and a switching device 4 (a Switch-4) needs to be passed through. In FIG. 2a, there are four data flows, that is, a data Flow 1 for transmitting packets 1, 5, and 9, a data Flow 2 for transmitting packets 5, 6, and 10, a data flow 3 for transmitting packets 3, 7, and 11, and a data flow 4 for transmitting packets 4, 8, and 12. It can be learned from directions of data flows that in FIG. 2a, the Switch-A is an implementation example of a second network device, the Switch-1, the Switch-2, the Switch-3, and the Switch-4 are implementation examples of a third network device, and the Switch-B is an implementation example of a fourth network device. When the Server-A communicates with the Server-B and the Server-C via the multi-layer network, four identical paths that exist between the Switch-A and the Switch-B in the network are four equal-cost paths. Hash computation is performed by using the ECMP, and selection from equal-cost member links are performed for data packets based on hash-key values for forwarding, so that four data flows are transmitted on four ECMPs.

Specifically, an implementation process of determining the path based on the local selection may be implemented based on a load balancing technology. Based on division at a granularity of the load balancing technology, commonly, there is a packet-based load balancing (Packet-based Load Balancing) technology, a flow-based load balancing (Flow-based Load Balancing) technology, and a flowlet-based load balancing (Flowlet-based Load Balancing) technology. The following describes three implementation processes by using some implementation examples.

Implementation 1: Implementation process of the packet-based load balancing

Specifically, in the implementation process of packet-based multi-path load balancing, a switching device forwards an $N^{th}$ packet to a path i, forwards an $(N+1)^{th}$ packet to a path (i+1), and so on, and polling is performed on an egress port on the switching device. Behavior of the packet-based multi-path load balancing is mathematically described as: Path selection is that a packet number is for performing a modulo operation on a quantity of optional equal-cost paths. A purpose is to evenly distribute all packets to equal-cost member links of a next hop.

An implementation example is shown in FIG. 2b. A Server-A sends four packets, that is, 1 to 4 packets in the figure, to a Server-B in a time sequence, and the four packets also reach the Switch-A in a sending sequence. The Switch-A forwards, according to a packet-based load balancing policy, packets 1 and 3 to a path connected to a Switch-1, and the Switch-A forwards packets 2 and 4 to a path connected to a Switch-2.

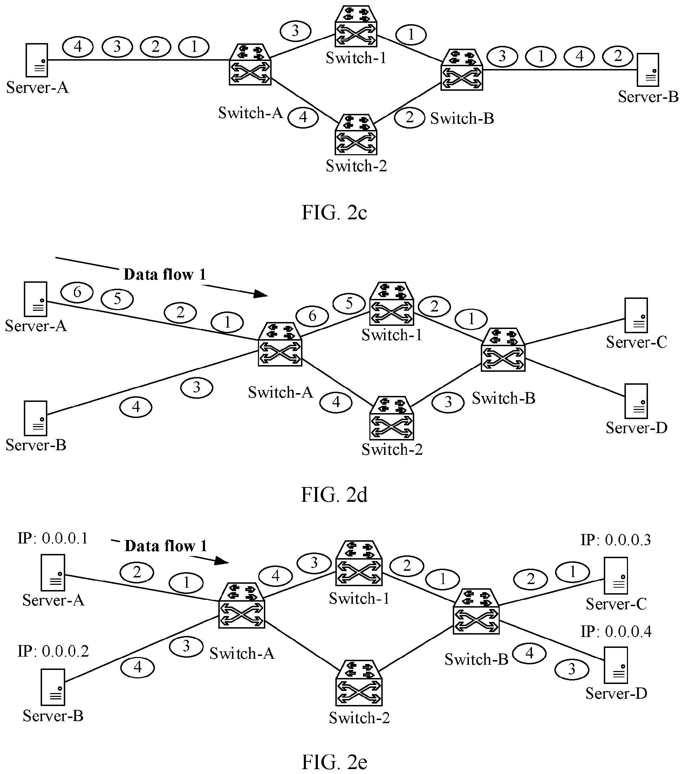

It can be learned from the example shown in FIG. 2b that in the implementation 1, network load can be evenly balanced between equal-cost member paths. However, different paths vary in forwarding latency, causing disorder of packets reaching a receive end. As shown in FIG. 2c, because transmission latency of a link in which the packet 1 and the packet 3 are located may be different from transmission latency of a link in which the packet 2 and the packet 4 are located, the packets 2 and 4 reach the Server-B earlier than the packets 1 and 3. A disorder phenomenon affects network performance due to re-transmission.

Implementation 2: Implementation process of the flow-based load balancing

Specifically, selecting a plurality of next hop mechanisms depends on an ECMP mechanism. In the mechanism, a feature field (for example, a source MAC address, a destination MAC address, IP 5-tuple information) of a data packet serves as a hash factor, a hash-key value is generated by using a hash algorithm, and then a member link is selected from load balancing links based on the hash-key value to forward the data packet. Data packets with different feature fields may have different hash-key values, and therefore different member links may be selected for forwarding. Data packets with same feature fields may have same hash-key values, and therefore same member links are selected for forwarding. In this way, load balancing forwarding is performed on different data flows flows through different member links, and a time sequence of data packets in a same data flow flow reaching a receive end is ensured.

An implementation example is shown in FIG. 2d. A Server-A sends, to a Server-D, a data Flow 1 (denoted as a Flow 1) including packets 1, 2, 5, and 6. A Server-B sends, to a Server-C, a data Flow 2 (denoted as a Flow 2) including packets 3 and 4. A Switch-A performs hash computation based on 5-tuple information of packets on an ingress port. The packets 1, 2, 5, and 6 have same key values and pass through a same path on a next hop of the Switch-A. Similarly, the packets 3 and 4 pass through another downstream path of the Switch-A.

It can be learned from the example shown in FIG. 2d that a disadvantage of the flow-based load balancing is that utilization of each member link in a load balancing link is not considered. Consequently, load balancing between member links is unbalanced, and especially, when a large data flow occurs, congestion on a selected member link is aggravated and even a packet loss is caused.

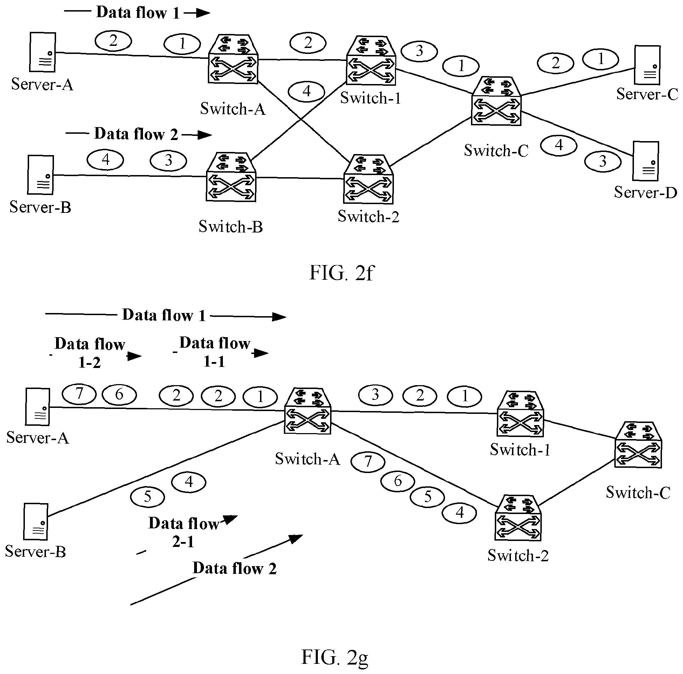

In addition, the flow-based load balancing causes two types of conflicts, and consequently, network load is unbalanced, and service performance is affected. The following provides descriptions separately by using FIG. 2e and FIG. 2f.

A type of conflict may be referred to as a local conflict. A reason is: Because hash-key results computed by using the hash algorithm for different input feature fields are the same, different flows are forwarded to a same path, and a conflict occurs.

For example, an implementation process of the local conflict is shown in FIG. 2e. IP addresses of a Server-A, a Server-B, a Server-C and a Server-D are 0.0.0.1, 0.0.0.2, 0.0.0.3, 0.0.0.4. The Server-A sends packets 1 and 2 to the Server-C, and the Server-B sends packets 3 and 4 to the Server-D. A hash function on the Switch-A is "source IP + destination IP". Therefore, a path computation method performed locally by the Switch-A is as follows.

1. A packet sent by the Server-A to the Server-C: A computation result according to a hash function is 4, a quantity of paths is 2, the computation result according to the hash function modulo the quantity of paths is 0, and therefore, a $0^{th}$ path is selected (where paths are numbered from 0).

2. A packet sent by the Server-B to the Server-D: A computation result according to a hash function is 6, a quantity of paths is 2, the computation result according to the hash function modulo the quantity of paths is 0, and therefore, a $0^{th}$ path is selected (where paths are numbered from 0).

It can be learned from a path selection result that all packets sent from the Server-A and the Server-B are forwarded to a path between the Switch-A and a Switch-1, and there is no packet on a path between the Switch-A and a Switch-2. As a result, the network load is unbalanced, and the service performance is damaged.

Another type of conflict may be referred to as a global conflict. A reason is: Because a current load balancing technology uses a distributed decision-making mechanism and lacks a global perspective, a switching device cannot predict and control a flow direction of an upstream flow, and a flow conflict is caused.

For example, an implementation process of the global conflict is shown in FIG. 2f. A Flow-1 including a packet 1 and a packet 2 is a flow from a Server-A to a Server-C, and a Flow-2 including a packet 3 and a packet 4 is a flow from a Server-B to a Server-D. When the Flow-1 passes through the Switch-A, a member link to a Switch-1 is selected for forwarding a flow. When the Flow-2 passes through the Switch-B, the member link to the Switch-1 is also selected for forwarding the flow-2. Both destination switching devices of the Flow-1 and the Flow-2 are located locally on the Switch-C, and the Switch-1 and the Switch-C are connected through only one link. Consequently, the Flow-1 and the Flow-2 conflict on a downstream link of the Switch-1. In addition, in the current load balancing technology using distributed decision-making, a global conflict problem cannot be predicted, controlled, and prevented. Such conflicts severely affect network performance.

Implementation 3: Implementation process of the flowlet-based load balancing

Specifically, when forwarding a data packet, a network device determines a time interval between a to-be-forwarded data packet and a previous data packet in a data flow to which the to-be-forwarded data packet belongs. If the time interval is greater than maximum link transmission latency (flowlet_gap_time) of member links in a load balancing link, the to-be-forwarded data packet is considered as a first packet of a new flowlet (Flowlet). If the time interval is less than maximum link transmission latency of member links in a load balancing link, the to-be-forwarded data packet is considered as a same flowlet as the previous data packet. A device selects a member link with lighter load from a current load balancing link based on a flowlet for forwarding. For data packets in a same flowlet, same member links are selected for forwarding.

An implementation example is shown in FIG. 2g. A Server-A and a Server-B respectively send a Flow-1 and a Flow-2 to a Server-C via a network. Packets 1, 2, and 3 in the Flow-1 are forwarded through a link between a Switch-1 and a Switch-A, and are denoted as a data flow 1-1 (Flowlet1-1). Because the Flow-2 to which packets 4 and 5 are belonged is a different flow, the packets 4 and 5 in the Flow-2 are forwarded through another equal-cost member link, that is, a link between a Switch-2 and the Switch-A, and are denoted as a data flow 2-1 (Flowlet2-1). Because a gap between packets 6 and 7 in the Flow-1 and a previous packet is greater than flowlet_gap, the packet 6 is detected as a first packet of a new flowlet. In this case, a new flowlet including the packets 6 and 7 and a flowlet including the packets 1, 2, and 3 are same flows, but are different flowlets. Therefore, the new flowlet including the packets 6 and 7 and the flowlet including the packets 1, 2, and 3 need to be forwarded through different equal-cost member links, and the new flowlet including the packets 6 and 7 is denoted as a data flow 1-2 (Flowlet1-2). Therefore, as shown in FIG. 2g, the Flowlet1-1 in the Flow-1, that is, the packets 1, 2, and 3, is forwarded through the link between the Switch-A and the Switch-1; and the Flowlet1-2 in the Flow-1 and the Flow-2, that is, packets 4, 5, 6, and 7, are forwarded through the link between the Switch-A and the Switch-2.

In the implementation process of the flowlet-based load balancing in the implementation 3, an entire flow may be divided into a plurality of flowlets based on a packet interval. In addition, paths can be selected for different flowlets based on network features, for example, based on link utilization and egress port queue depth. However, this implementation still has disadvantages. In one aspect, a host side cannot actively construct the flowlet. In another aspect, if the host side is forced to construct the flowlet by using a sending-stopping-sending mechanism, a throughput is affected when the network is not congested, and the link utilization is low; however, when the network is congested, it cannot be ensured that a gap between constructed flowlets is greater than a flowlet gap set by a switch, causing disorder on a receive end, and triggering re-transmission. In conclusion, a flowlet-based multi-path load balancing technology has disadvantages of both the packet-based load balancing technology and the flow-based load balancing technology: risks of unbalanced load and packet disorder. In addition, the flowlet-based load balancing technology needs to consider balancing maximization of a network throughput and minimization of the packet disorder, and accurately sets a value of flowlet_gap_time. However, in a process of balancing the network throughput and the packet disorder, flowlet_gap_time is not a static parameter, and the value of flowlet_gap_time needs to be dynamically adjusted based on feedback of a network performance indicator. In the mechanism of dynamically adjusting the value of flowlet_gap_time, the network throughput is affected, and a global optimal value cannot be reached.

It can be learned from the implementation processes of the implementation 1 to the implementation 3 that the following technical problems exist.

In one aspect, in a multi-layer network, there are usually a plurality of communication apparatuses that serve as forwarding devices, and each communication apparatus that serves as a forwarding device needs a process in which a path is selected from a plurality of paths according to a local policy of the communication apparatus, to determine a forwarding path. Consequently, efficiency of a path determining manner is low. In another aspect, in the foregoing three implementations, because a manner in which each communication apparatus that serves as the forwarding device locally makes a decision lacks global planning of a plurality of data flows transmitted in the network, the path determining manner easily causes other problems. For example, in the implementation 1, a local flow conflict of the switching device is easily caused; in the implementation 2, the global conflict and the local conflict are easily caused; and in the implementation 3, a network throughput is easily affected.

To resolve the foregoing problems, this application provides a path determining method and a related device, to improve data flow forwarding efficiency. The following further provides detailed descriptions with reference to the accompanying drawings.

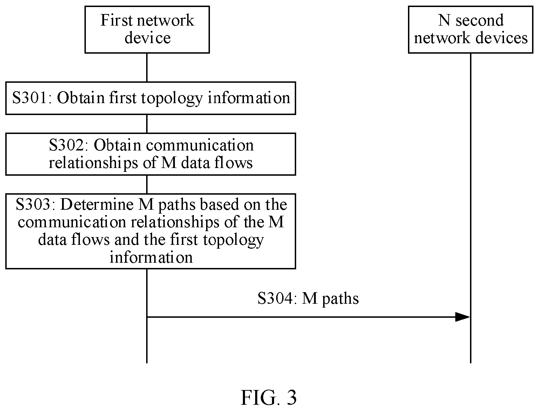

FIG. 3 is a schematic diagram of an implementation of a path determining method according to this application. The method includes the following steps. It should be noted that the method may be performed by a first network device, the method may be performed by some components (for example, a processor, a chip, or a chip system) of the first network device, or the method may be implemented by a logical module or software that can implement all or some functions of the first network device. In the following embodiment, an example in which the method is performed by the first network device is used for description. The first network device may be a router, a switch, a virtual machine, or the like.

S301: The first network device obtains first topology information.

In this embodiment, the first topology information obtained by the first network device in step S301 includes connection relationships between N second network devices and P third network devices, any second network device is an upstream network device of any third network device, N is an integer greater than or equal to 2, and P is an integer greater than or equal to 1.

In a possible implementation, the first network device is a controller or one of the P third network devices. Specifically, the first network device that performs the method to determine and send M paths may be the controller, or may be one of the P third network devices, to improve flexibility of implementing a solution.

In an implementation example, in the scenario example shown in FIG. 1b, the first network device may be the controller in FIG. 1b, or the first network device may be any third network device in FIG. 1b.

For example, the scenario shown in FIG. 1e is used. In a process in which a server indicated by source address information of a data flow sends the data flow to another server indicated by destination address information of the data flow, the data flow sent by the server may need to be separately forwarded by a leaf node (denoted as a source leaf node for ease of reference below) connected to the server, a spine node, and a leaf node (denoted as a destination leaf node for ease of reference below) connected to the another server. The source leaf node may be the N second network devices indicated by the first topology information in step S301, the spine node may be the P third network devices indicated by the first topology information in step S301, and the destination leaf node may be K fourth network devices mentioned below.

Optionally, the first network device may be any spine node connected to each leaf node in FIG. 1e, or the first network device may be a controller (not shown in the figure) connected to each leaf node in FIG. 1e, so that the first network device sends the M paths to each leaf node in a subsequent step S304.

It should be understood that in the example shown in FIG. 1b, a same leaf node may have different roles in different data flows.

For example, when the data flow is a bidirectional data flow, a leaf node is not only a source leaf node in a flow direction of the data flow, but also a destination leaf node in another flow direction of the data flow. For another example, when the data flow is a unidirectional data flow, a leaf node is a source leaf node of the data flow or a destination leaf node of the data flow. For another example, a same leaf node may be separately configured to transmit different data flows. In a data flow, the leaf node may be the source leaf node, and in another data flow, the leaf node may be the source leaf node or the destination leaf node.

S302: The first network device obtains communication relationships of M data flows.

In this embodiment, a communication relationship that is of each of the M data flows and that is obtained by the first network device in step S302 includes source address information and destination address information, M is an integer greater than or equal to 2, and the M data flows are separately transmitted by the N second network devices to the P third network devices.

It should be noted that implementation processes of step S301 and step S302 are not limited in this application. To be specific, the first network device may first perform step S301 and then perform step S302, or the first network device may first perform step S302 and then perform step S301.

It should be understood that any one of the M data flows may be a unidirectional data flow, or may be a bidirectional data flow. This is not limited in this application. If a data flow in the M data flows is the bidirectional data flow, in the communication relationships of the M data flows, a communication relationship of the bidirectional data flow may include only source address information and destination address information of a flow direction, or a communication relationship of the bidirectional data flow may include source address information and destination address information corresponding to each of two flow directions. This is not limited herein.

In a possible implementation, that the first network device obtains communication relationships of M data flows includes: The first network device separately receives communication relationships that are of the M data flows and that are from the N second network devices. Specifically, the first network device may obtain the communication relationships of the M data flows in a manner of separately receiving the communication relationships that are of the M data flows and that are from the N second network devices, so that the first network device obtains the communication relationships of the M data flows in a manner of interaction between the first network device and the N second network devices.

Optionally, in step S302, the communication relationships of the M data flows are preconfigured in the first network device, to avoid overhead and latency increase caused by interaction between different network devices.

Similarly, in step S301, the first topology information obtained by the first network device in step S301 may be determined by using respective topology information sent by the N second network devices, or the first topology information is preconfigured in the first network device.

For example, the following uses an example in which the first network device determines the first topology information in step S301 and the communication relationships of the M data flows in step S302 by using respective communication relationships and the respective topology information that are sent by the N second network devices for example descriptions. Each second network device needs to establish a flow table for a local elephant flow. A process is as follows.

First, when a new flow enters the second network device, the second network device adds a 5-tuple and feature information (for example, first packet time and a quantity of bytes) of the flow to an original flow table.

Then, the second network device sets threshold values for an elephant flow and a mice flow based on a quantity of bytes in a collection periodicity, filters out the mice flow, and reserves the elephant flow.

Then, the second network device converts the original flow table into a 2-tuple flow table, and reserves a source IP and a destination IP. A purpose is to reserve key fields required by a global optimal path allocation algorithm, to reduce storage space.

Finally, the second network device aggregates the filtered 2-tuple flow table with local topology knowledge to form a local flow information table. Implementation examples of the local flow information table are shown in Table 1 to Table 3.

**Table 1**

| Flow number | Flow table generation switch | Source IP | Destinatio n IP | First packet time ($\mu$s) | Quantity of bytes |
|---|---|---|---|---|---|
| 1 | SW 1 | 1 | 3 | 1.0 | xxx |
| 2 | SW 1 | 2 | 6 | 2.0 | XXX |
| 3 | SW 1 | 1 | 2 | 22.0 | XXX |
| ... | ... | ... | ... | ... | ... |

**Table 2**

| Flow number | Flow table generation switch | Source IP | Destinatio n IP | First packet time ($\mu$s) | Quantity of bytes |
|---|---|---|---|---|---|
| 1 | SW 2 | 3 | 1 | 1.0 | xxx |
| 2 | SW 2 | 4 | 7 | 2.0 | XXX |
| 3 | SW 2 | 3 | 6 | 22.0 | XXX |
| ... | ... | ... | ... | ... | ... |

**Table 3**

| Flow number | Flow table generation switch | Source IP | Destinatio n IP | First packet time ($\mu$s) | Quantity of bytes |
|---|---|---|---|---|---|
| 1 | SW 3 | 6 | 2 | 2.0 | xxx |
| 2 | SW 3 | 8 | 5 | 4.0 | XXX |
| 3 | SW 3 | 7 | 8 | 22.0 | XXX |
| ... | ... | ... | ... | ... | ... |

Optionally, for the flow table obtained twice successively, the second network device may delete an aged entry. In addition, all communication nodes of a task may be provided in a form of a file, for example, all communication devices of the task are explicitly provided in a form of a hostfile (hostfile). A communication relationship of a current task can be obtained with reference to an explicit communication algorithm name.

Then, after obtaining local flow information, the second network device aggregates an established flow table to the first network device, so that the first network device obtains the communication relationships of the M data flows in step S302.

Optionally, implementation examples of a table obtained by aggregating Table 1 to Table 3 are shown in Table 4.

**Table 4**

| Flow number | Flow table generation switch | Source IP | Destination IP | First packet time ($\mu$s) | Quantity of bytes |
|---|---|---|---|---|---|
| 1 | SW 1 | 1 | 5 | 1.0 | xxx |
| 2 | SW 1 | 2 | 6 | 10.0 | XXX |
| 3 | SW 1 | 3 | 7 | 22.0 | XXX |
| 4 | SW 2 | 4 | 8 | 25.0 | xxx |
| 5 | SW 2 | 1 | 3 | 1.0 | XXX |
| 6 | SW 3 | 2 | 4 | 10.0 | XXX |
| 7 | SW 2 | 5 | 7 | 22.0 | XXX |
| 8 | SW 2 | 4 | 8 | 25.0 | xxx |
| 9 | SW 2 | 1 | 2 | 1.0 | XXX |
| 10 | SW 3 | 3 | 4 | 10.0 | xxx |
| 11 | SW 2 | 5 | 6 | 22.0 | xxx |
| 12 | SW 4 | 7 | 8 | 25.0 | XXX |

Optionally, the foregoing implementation process may be represented as an implementation process in FIG. 4a-1 and FIG. 4a-2, including "Step 401: Establish a flow table for a local elephant flow and aggregate a communication relationship". It should be understood that a "global computing node" in the implementation process shown in FIG. 4a-1 and FIG. 4a-2 is the first network device, and an "edge switching node" is the N second network devices.

In addition, the first network device periodically obtains a local flow communication relationship and topology information. The local flow communication relationship and topology information are aggregated to the first network device. The first network device integrates aggregated local flow information tables of the N second network devices, and divides communication clusters based on the communication relationship, to determine the M data flows.

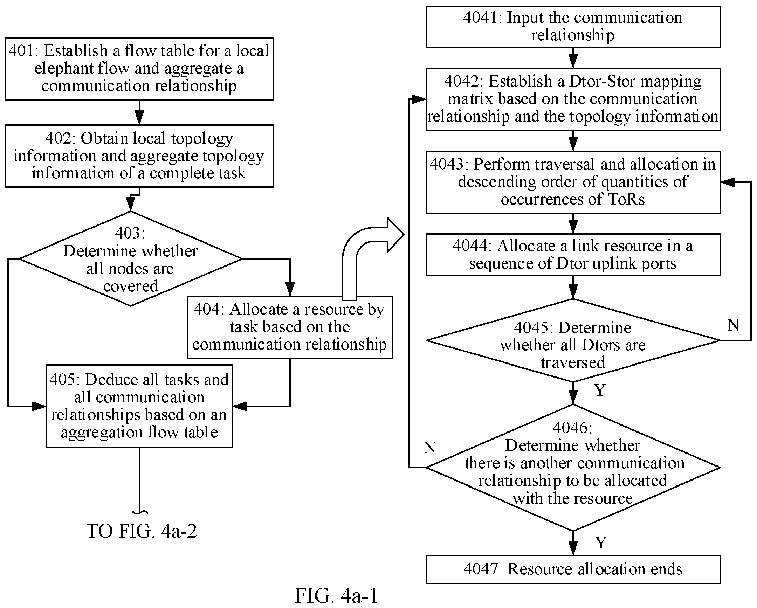

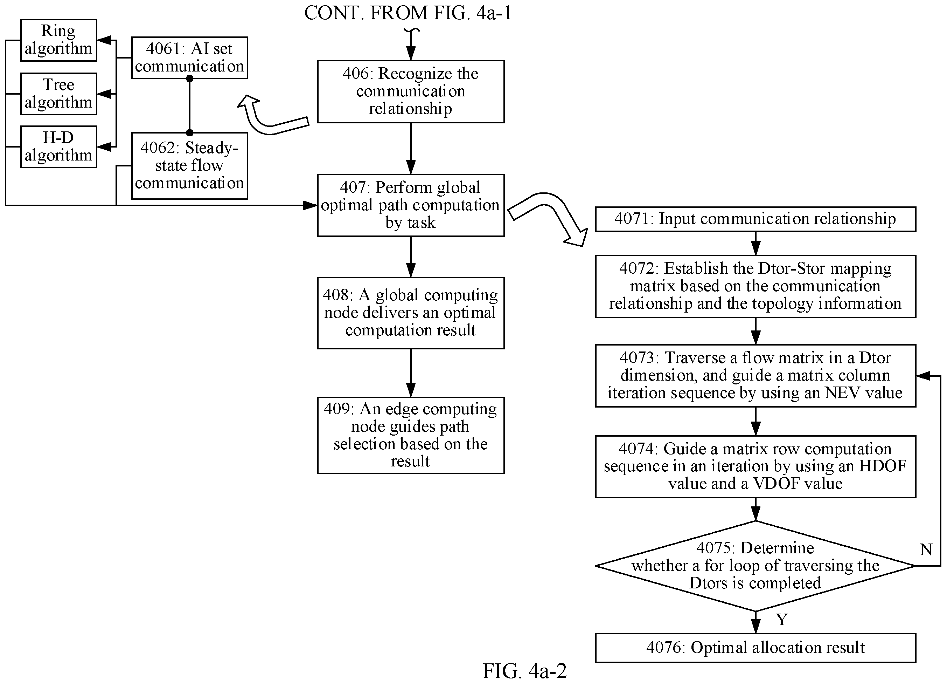

Optionally, after the N second network devices aggregate the local communication relationship and the topology information to the first network device, the first network device may determine whether the M data flows that currently need to be computed belong to a single-task scenario or a multi-task scenario. In the multi-task scenario, resource allocation needs to be performed for each individual task. An implementation process may be represented as an implementation process of "Step 402: Obtain local topology information and aggregate topology information of a complete task" in FIG. 4a-1.

Optionally, the first network device may further perform "Step 403: Determine whether all nodes are covered" in FIG. 4a-1. In addition, when it is determined that all the nodes are covered, the first network device performs "Step 405: Guide all tasks and all communication relationships of steps based on an aggregation flow table"; or it is determined that all the nodes are not covered, the first network device performs an implementation process of "Step 404: Allocate a resource by task based on the communication relationship" in FIG. 4a-1.

The following further describes the implementation process corresponding to step 404 in FIG. 4a-1, including the following process.

4041: Input the communication relationship.

4042: Establish a Dtor-Stor mapping matrix based on the communication relationship and the topology information.

4043: Perform traversal and allocation in descending order of quantities of occurrences of ToRs.

4044: Allocate a link resource in a sequence of Dtor uplink ports.

4045: Determine all the Dtors are traversed, where if all the Dtors are traversed, step 4046 is performed; or if all the Dtors are not traversed, step 4043 is performed again.

4046: Determine whether there is another communication relationship to be allocated with the resource, where if there is another communication relationship to be allocated with the resource, step 4047 is performed; or if there is no another communication relationship to be allocated with the resource, step 4042 is performed again.

4047: Resource allocation ends.

It can be learned from the foregoing implementation process that the first network device converts communication relationships of same tasks into a communication relationship matrix based on the topology information and first packet time. In addition, the first network device converts the communication relationship matrix into the Dtor-Stor mapping matrix, and starts to allocate a resource from a ToR that appears most frequently. In a scenario shown in FIG. 4b, a communication relationship matrix may be obtained as shown in Table 5, a Dtor-SID mapping matrix is shown in Table 6, and the Dtor-Stor mapping matrix is shown in Table 7.

**Table 5**

| Communication relationship matrix | | | | | | | | |
|---|---|---|---|---|---|---|---|---|
| Src ID | 1 | 2 | 3 | 4 | 5 | 6 | 9 | 10 |
| Dst ID | 5 | 6 | 9 | 10 | 1 | 2 | 3 | 4 |

**Table 6**

| Dtor-SID mapping matrix | | | | |
|---|---|---|---|---|
| Dtor | T1 | T2 | T3 | T4 |
| SID | 5 | 1 | 3 | |
| | 6 | 2 | 4 | |
| | 9 | | | |
| | 10 | | | |

**Table 7**

| Dtor-Stor mapping matrix | | | | |
|---|---|---|---|---|
| Dtor | T1 | T2 | T3 | T4 |
| Stor | T2 | T1 | T1 | |
| | T2 | T1 | T1 | |
| | T3 | | | |
| | T3 | | | |

In the foregoing implementation examples of Table 5 to Table 7, a ToR-1 appears most frequently, and the resource is allocated starting from the ToR-1. To be specific, when allocating the resource, the first network device performs polling allocation on ToR uplink ports based on a quantity of spines. As shown in FIG. 4b, an egress port on the ToR-1 performs polling on S-1 and S-2, and after all ToRs are traversed, a resource allocation process ends. An allocation result in this embodiment is shown in connection relationships between different S nodes (including S1 and S2) and T nodes (including T1, T2, T3, and T4) in FIG. 4b, and the ToR uplink ports are link resources allocated to a current task.

In a possible implementation, the M data flows that are obtained by the first network device in step S302 correspond to one of a plurality of artificial intelligence (artificial intelligence, AI) set communication tasks. Optionally, the M data flows correspond to a long steady-state flow task, and a flow volume of a data flow in the long steady-state flow task is greater than a preset threshold within specific duration.

For example, the solutions provided in this application are applicable to an elephant flow scenario in which a communication relationship periodically changes or in which a requirement on convergence time is strict. The elephant flow scenario is mainly subdivided into a long steady-state flow scenario and an AI set communication scenario.

Optionally, a communication relationship feature of the long steady-state flow scenario is that the communication relationship usually does not change, or may be considered as having an infinite change periodicity. In the scenario, as a task starts and ends, a flow table is updated and aged. In a procedure, an edge switching device needs to obtain a local flow communication relationship only after a new task starts, and aggregates the local flow communication relationship into a flow information table on a first network device, so that the flow information table can serve as an input of a global optimal path allocation algorithm for computation. However, if destination IPs are the same but source IPs are different, it indicates that an incast (Incast) flow exists in the scenario. An incast scenario of a long steady-state flow does not belong to a problem to be resolved in the present invention. If such a communication relationship occurs, a global optimal path allocation algorithm does not need to be used for computation.

Optionally, a communication relationship feature of the AI set communication scenario is that for inter-device communication in the AI set communication scenario, an entire process is usually divided into a plurality of phases (phases) based on an algorithm. In each phase, all communication relationships between devices changes, and all devices in a communication cluster need to be synchronized when each phase starts. This has an extremely high requirement on a convergence speed of the algorithm. The following describes examples of three types of algorithms mainly used in the AI set communication scenario. The three types of algorithms include a halving-doubling (H-D) algorithm, a ring algorithm, and a tree algorithm.

In a possible implementation, the H-D algorithm is divided into two stages. A first stage is halving, and a reduce-scatter (reduce-scatter) operation is performed, as shown in FIG. 5a. A total of ($\log_2$ N) phases (phases) are executed, where N is a quantity of communication nodes. Each time a phase is advanced, an amount of data exchanged between nodes is halved.

Specifically, it is because that a communication relationship feature of an AI set communication scenario is that for inter-device communication in the AI set communication scenario, an entire process is usually divided into a plurality of phases (phases) based on an algorithm. In different phases, all communication relationships between devices change. A communication step is, where n is a current phase, and N is the quantity of communication nodes. In addition, when each phase starts, all devices in a communication cluster need to be synchronized. This has an extremely high requirement on a convergence speed of the algorithm.

A second stage is doubling, and an all-gather (all-gather) operation is performed, as shown in FIG. 5b. Same as the halving, a total of ($\log_2$ N) phases are performed. Therefore, a total of ($2*\log_2$ N) phases need to be performed in an entire H-D process. Different from the halving, each time a phase is advanced, an amount of data exchanged between nodes is doubled.

In conclusion, in an all-reduce (all-reduce) phase of the inter-device communication in the AI set communication that works based on the H-D algorithm, a total of ($2*\log_2$ N) phases are needed, where N is the quantity of communication nodes. Before an optimal path for a flow on a network is computed based on a global optimal path allocation algorithm, flow communication relationships in all phases of an entire all-reduce stage need to be restored. In a computation stage of the global optimal path allocation algorithm, optimal paths in all phases are also computed to obtain an optimal result.

As shown in FIG. 5c, Table 4 may be represented as communication relationships in FIG. 5c. It can be learned that communication relationships of all phases of an all-reduce process supported by an H-D algorithm are restored from a communication relationship of a task. For all communication devices, all local flows of same servers are sorted. Sorted locations with same numbers are same phases. An advantage of the sorting is that clock synchronization of an entire network can be avoided.

In a possible implementation, a ring algorithm is different from the H-D algorithm. This is mainly because communication relationships in an entire communication process of the ring algorithm do not change.

For example, FIG. 6 is a communication relationship feature in an entire all-reduce phase. Similar to an H-D algorithm, a ring algorithm is divided into two parts: A first step is scatter-reduce (scatter-reduce), and a second step is all-gather. In the scatter-reduce part, communication nodes exchange data, so that each node can obtain a final result, that is, a piece of data. In the subsequent all-gather part, the nodes exchange the final pieces, so that all the nodes get completed data. In a scatter-reduce process and an all-gather process, each of N communication nodes receives and sends data (N-1) times. A data volume of K/N is sent each time, where K represents a sum of values added on different nodes in complete data. Therefore, a total amount of data transmitted to each node and sent from each node is expressed as:

$$\mathrm{DataTransferred} = 2(\mathrm{N} - 1)\mathrm{K/N}.$$

It can be learned that in the all-reduce process, the N communication nodes perform a total of 2(N-1) phases, but in all phases, communication relationships of nodes do not change. Therefore, a communication relationship processing manner of such an algorithm is the same as that of a long steady-state flow. An optimal path that is of only one phase and that needs to be obtained through computation is a global optimal path computation result of all the phases.

In a possible implementation, a difference between a tree algorithm and the ring algorithm lies in that in the tree algorithm, a communication relationship changes in each phase. A difference between the tree algorithm and the H-D algorithm lies in that in the tree algorithm, communication objects that send and receive data are different in same phases.

For example, FIG. 7 is a communication relationship feature in an entire all-reduce phase. In a tree algorithm, two communication relationship trees need to be operated. Features of the two trees are that a leaf node of a first tree is a spine node of a second tree, and a spine node of the first tree is a leaf node of the second tree. In addition, leaf nodes under same spine nodes cannot simultaneously send or receive data to or from the spine nodes. In an entire inter-device communication process, the tree algorithm is divided into two steps: A first step is reduce (reduce), and a second step is broadcast (broadcast). In the reduce phase, at an ith moment, a communication relationship is that devices connected through a link represented by a dashed line in the figure can communicate with each other, and at an (i+1)th moment, a communication relationship is that devices connected through a link represented by a solid line in the figure can communicate with each other. In the broadcast phase, a communication relationship has same features as that in the reduce phase.

In conclusion, three algorithms change the communication relationships of the nodes, including communication relationship features of the long steady-state flow being all different. Communication features of the long steady-state flow are similar to those of the ring algorithm, and do not change in the entire inter-device communication process. A communication relationship between nodes in an H-D algorithm periodically changes, and a halving process and a doubling process are inverse to each other. In a same phase, a communication relationship is that a sending object and a receiving object are the same. A communication relationship between nodes in the tree algorithm is similar to that in the H-D algorithm, and periodically changes. However, different from the H-D algorithm, in a same phase, for a same node in the tree algorithm, objects that send and receive data are different. Based on the foregoing features, a flow can be recognized, and communication relationships of all phases can be completed. In addition, an algorithm for current communication may be further formulated in a file. For example, an algorithm flag of ring, H-D, tree, or static communication is explicitly provided in the file.

Optionally, the solutions provided in this application are applicable to a scenario in which overall network bandwidth is sufficient. That the overall network bandwidth is sufficient is represented as: Assuming that n flows with bandwidth of d exist in a network, the n flows need to be distributed in m equal-cost links with a capacity of c. If nd>mc, it indicates that the overall network bandwidth is insufficient. A congestion problem cannot be resolved depending on a load balancing mechanism alone. A network congestion problem needs to be resolved using the load balancing mechanism in coordination with a scheduling algorithm or a congestion control algorithm. The present invention is applicable to a scenario in which nd≤mc, for example, the AI set communication scenario mentioned above in which the elephant flow is mainly used, the communication relationship periodically changes, and the requirement on the algorithm convergence time is strict; and a long steady-state flow scenario in which a communication relationship is fixed.

S303: The first network device determines the M paths based on the communication relationships of the M data flows and the first topology information.

In this embodiment, after the first network device obtains the first topology information in step S301 and obtains the communication relationships of the M data flows in step S302, in step S303, the M paths determined by the first network device based on the communication relationships of the M data flows and the first topology information respectively correspond to the M data flows. The M paths indicate paths through which the M data flows are transmitted by the N second network devices to the P third network devices.

In a possible implementation, the M data flows are transmitted by the P third network devices to the K fourth network devices, where K is a positive integer. A specific process in which the first network device determines the M paths based on the communication relationships of the M data flows and the first topology information in step S403 includes: The first network device determines a first mapping relationship based on the communication relationships of the M data flows and the first topology information, where the first mapping relationship indicates a mapping relationship between a second network device corresponding to the source address information of each of the M data flows and a fourth network device corresponding to the destination address information of each of the M data flows. The first network device determines the M paths based on the first mapping relationship.

Optionally, the topology information further includes connection relationships between the P third network devices and the K fourth network devices.

Optionally, any fourth network device is different from any second network device.

Optionally, at least one of the N second network devices and at least one of the K fourth network devices are a same network device.

Optionally, N is equal to K, and the N second network devices and the K fourth network devices are a same network device.

Specifically, an implementation in which the first network device determines the M paths is provided, so that the first network device determines the M paths based on mapping relationships between the N second network devices and the K fourth network devices.

In a possible implementation, that the first network device determines the M paths based on the first mapping relationship includes: The first network device determines first sorting information based on the first mapping relationship, where the first sorting information indicates sorting of a quantity of second network devices corresponding to the K fourth network devices. The first network device sequentially traverses the egress ports on the N second network devices based on the first sorting information, to obtain a second mapping relationship, where the second mapping relationship indicates mapping relationships between the egress ports on the N second network devices and the K fourth network devices. The first network device determines the M paths based on the second mapping relationship. Specifically, an implementation in which the first network device determines the M paths is provided, so that the first network device determines the M paths based on the first mapping relationship, the first sorting information, and the second mapping relationship that are sequentially determined.

In a possible implementation, that the first network device sequentially traverses egress ports on the N second network devices based on the first sorting information, to obtain a second mapping relationship includes: The first network device sequentially traverses the egress ports on the N second network devices based on the first sorting information, to obtain a third mapping relationship, where the third mapping relationship indicates an optional quantity of egress ports on the second network device corresponding to each fourth network device. The first network device determines the second mapping relationship based on the third mapping relationship. Specifically, the third mapping relationship indicates the optional quantity of egress ports on the second network device corresponding to each fourth network device. A larger value of the optional quantity indicates smaller uncertainty of a corresponding optional path of the fourth network device. On the contrary, a smaller value of the optional quantity indicates greater uncertainty of a corresponding optional path of the fourth network device. Therefore, the second mapping relationship determined based on the third mapping relationship can be preferentially for traversing egress ports on the second network device corresponding to a fourth network device with an optional path of small uncertainty, to improve accuracy of the solution, and avoid a conflict between the M paths subsequently determined based on the second mapping relationship.

S304: The first network device separately sends the M paths to the N second network devices.

In this embodiment, after determining the M paths in step S303, the first network device separately sends the M paths to the N second network devices in step S304.

In a possible implementation, the M data flows are transmitted by the P third network devices to the K fourth network devices, where K is an integer greater than or equal to 1. The M data flows corresponding to the communication relationships that are obtained by the first network device in step S302 include a first data flow and a second data flow, where source address information of the first data flow and source address information of the second data flow correspond to different second network devices, and destination address information of the first data flow and destination address information of the second data flow correspond to a same fourth network device. In addition, the M paths determined by the first network device in step S303 include a first path and a second path, where the first path corresponds to the first data flow, the second path corresponds to the second data flow, and the first path and the second path correspond to different third network devices.

Specifically, the M paths determined by the first network device include the first path corresponding to the first data flow and the second path corresponding to the second data flow, and the first path and the second path correspond to the different third network devices, where the source address information of the first data flow and the source address information of the second data flow correspond to the different second network devices, and the destination address information of the first data flow and the destination address information of the second data flow correspond to the same fourth network device. In other words, because any fourth network device is a downstream network device of any third network device, after the first data flow and the second data flow are separately sent by different second network devices to different third network devices, the different third network devices separately send the first data flow and the second data flow to a same fourth network device. This can avoid network congestion generated in a process in which data flows from different second network devices are transmitted by a same third network device and then transmitted to a same fourth network device by the same third network device, to improve transmission efficiency of the first data flow and the second data flow.

In a possible implementation, the M paths determined by the first network device in step S303 further indicate egress ports of the M data flows on the N second network devices. Specifically, in addition to indicating the paths through which the M data flows are transmitted by the N second network devices to the P third network devices, the M paths determined by the first network device further indicate the egress ports of the M data flows on the N second network devices, so that the N second network devices can determine, after receiving the M paths, the egress ports for sending the M data flows.

In a possible implementation, the implementation method in FIG. 3 further includes: The first network device obtains second topology information, where the second topology information includes connection relationships between A second network devices and the P third network devices, at least one of the A second network devices is the same as the at least one of the N second network devices, and A is an integer greater than or equal to 1. The first network device obtains communication relationships of B data flows, where a communication relationship of each of the B data flows includes source address information and destination address information, and B is an integer greater than or equal to 1; and the B data flows are separately transmitted by the A second network devices to the P third network devices. After the first network device determines the M paths based on the communication relationships of the M data flows and the topology information, the method further includes: The first network device determines B paths based on the communication relationship of the B data flows and the topology information, where the B paths respectively correspond to the B data flows, and the B paths indicate paths through which the M data flows are sent by the A second network devices to the P third network devices, where egress ports that are on a second network device and that correspond to the B paths are different from egress ports that are on a second network device and that correspond to the M paths. The first network device separately sends the B paths to the A second network devices. Specifically, the egress ports that are on the second network device and that correspond to the B paths determined by the first network device are different from the egress ports that are on the second network device and that correspond to the M paths, to avoid a flow conflict generated when the M data flows and the B data flows correspond to an egress port on a same second network device, and improve data transmission efficiency of the M data flows and the B data flows.

In a possible implementation, the M data flows corresponding to the communication relationships that are obtained by the first network device in step S302 include a third data flow and a fourth data flow, where source address information of the third data flow and source address information of the fourth data flow correspond to a same second network device. In addition, the M paths determined by the first network device in step S303 include a third path and a fourth path, where the third path corresponds to the third data flow, the fourth path corresponds to the fourth data flow, and the third path is different from the fourth path. Specifically, the M paths determined by the first network device include the third path corresponding to the third data flow and the fourth path corresponding to the fourth data flow, and the third path is different from the fourth path. The source address information of the third data flow and the source address information of the fourth data flow correspond to the same second network device. In other words, the third data flow and the fourth data flow are separately transmitted by the same second network device through different paths. This can avoid network congestion generated in a process in which data flows from a same second network device are transmitted through a same path, to improve transmission efficiency of the third data flow and the fourth data flow.

According to the foregoing technical solution, after obtaining the first topology information including the connection relationships between the N second network devices and the P third network devices in step S301, and obtaining the communication relationships of the M data flows in step S302, the first network device determines the M paths based on the communication relationships of the M data flows and the first topology information in step S303, and sends the M paths to the N second network devices in step S304. Then, the N second network devices may separately send the M data flows to the P third network devices based on the M paths. In other words, serving as a device for determining a path, the first network device can determine the M paths corresponding to M data flows transmitted between N second network devices and P third network devices. Therefore, by comparison with an implementation in which a path conflict is easily caused because the N second network devices determine paths only based on local data flows, in the foregoing method, the first network device can determine the paths based on global information, to avoid a path conflict and improve data flow forwarding efficiency.

The following uses an example in which a network device (that is, a second network device) corresponding to source address information is a source top of rack (source top of rack, Stor) switch and a network device (that is, a fourth network device) corresponding to destination address information is a destination top of rack (destination top of rack, Dtor) switch to describe an implementation process of step S303.

In a possible implementation, the M paths determined in step S303 may be used to resolve an optimal path allocation problem. The optimal path allocation problem is a mathematical precise coverage problem, and belongs to an NP-complete problem. It is described as: A universal set X is uplink ports that are on Stors (Stors) and that correspond to Dtors (Dtors) at which DIPs in all IP pairs are located, and a subset S is an uplink port that is on the Stor and that corresponds to each Dtor. A problem is that S is required to be precise coverage of X, to be specific, uplink ports on Stors corresponding to all Dtors cannot be repeatedly allocated. In this way, a purpose of allocating an optimal path to each flow in a network is achieved. An entire optimal path computation and allocation process is divided into the following steps. The algorithm, in step S303, used to resolve the problem may be referred to as a flow matrix algorithm (flow matrix algorithm, FMA).

For example, an implementation process of the first network device in step S303 may be represented as an implementation process (that is, "Step 407: Perform global optimal path computation by task") in a dashed box 4 in FIG. 4a-2. Step 407 includes the following implementation process.

Step 4071: The first network device obtains the input communication relationship [SIP, DIP].

Step 4072: The first network device establishes the Dtor-Stor mapping matrix based on the communication relationship and the topology information.

Step 4073: The first network device traverses a flow matrix in a Dtor dimension, and guides a matrix column iteration sequence by using a negative effect value (negative effect value, NEV).

Step 4074: The first network device guides a matrix row computation sequence in an iteration by using a horizontal degree of freedom value (horizontal degree of freedom, HDOF) value and a vertical degree of freedom (vertical degree of freedom, VDOF) value.

Step 4075: Determine whether a for loop of traversing the Dtors is completed, where if the for loop of traversing the Dtors is completed, step 4076 is performed; or if the for loop of traversing the Dtors is not completed, step 4073 is repeatedly performed.

Step 4076: Output an optimal allocation result.

Optionally, as shown in FIG. 4a-2, a recognition result obtained in "Step 406: Recognize the communication relationship" may also serve as one of inputs of "Step 407: Perform global optimal path computation by task", so that it is determined whether a data flow corresponding to a currently input communication relationship is used to perform an AI set communication task in 4061 or a steady-state flow communication task in 4062.

The following describes step 1 and step 2 by using some implementation examples.

In step 4071, an implementation of aggregating, by the first network device, flow information of a task communication cluster is shown in Table 8.

**Table 8**

| Flow number | Flow table generation switch | SI P | DI P | First packet time (μs) | Quantity of bytes |
|---|---|---|---|---|---|
| 1 | T0 | 0 | 14 | 1.0 | XX |
| 2 | T0 | 1 | 8 | 1.0 | XX |
| 3 | T0 | 2 | 31 | 1.0 | XX |
| 4 | T0 | 3 | 6 | 1.0 | XX |
| 5 | T1 | 4 | 12 | 1.0 | XX |
| 6 | T1 | 5 | 24 | 1.0 | XX |
| 7 | T1 | 6 | 3 | 1.0 | XX |
| 8 | T1 | 7 | 23 | 1.0 | XX |
| 9 | T2 | 8 | 1 | 1.0 | XX |
| 10 | T2 | 9 | 18 | 1.0 | XX |
| 11 | T2 | 10 | 25 | 1.0 | XX |
| 12 | T2 | 11 | 13 | 1.0 | XX |
| 13 | T3 | 12 | 4 | 1.0 | XX |
| 14 | T3 | 13 | 11 | 1.0 | XX |
| 15 | T3 | 14 | 0 | 1.0 | XX |
| 16 | T3 | 15 | 30 | 1.0 | XX |
| 17 | T4 | 16 | 19 | 1.0 | XX |
| 18 | T4 | 17 | 28 | 1.0 | XX |
| 19 | T4 | 18 | 9 | 1.0 | XX |
| 20 | T4 | 19 | 16 | 1.0 | XX |
| 21 | T5 | 20 | 27 | 1.0 | XX |
| 22 | T5 | 21 | 22 | 1.0 | XX |
| 23 | T5 | 22 | 21 | 1.0 | XX |
| 24 | T5 | 23 | 7 | 1.0 | XX |
| 25 | T6 | 24 | 5 | 1.0 | XX |
| 26 | T6 | 25 | 10 | 1.0 | XX |
| 27 | T6 | 26 | 29 | 1.0 | XX |
| 28 | T6 | 27 | 20 | 1.0 | XX |
| 29 | T7 | 28 | 17 | 1.0 | XX |
| 30 | T7 | 29 | 26 | 1.0 | XX |
| 31 | T7 | 30 | 15 | 1.0 | XX |
| 32 | T7 | 31 | 2 | 1.0 | XX |

As shown in Table 8, the complete flow table aggregated by the first network device includes several important items: the flow number, flow table generation switch information, a communication relationship pair, that is, [SIP, DIP], the first packet time, and the quantity of bytes.

Optionally, as an input of an algorithm, initialization processing needs to be performed on the flow table. First, information needed in a computation process needs to be further filtered out from the original flow table. Information related to computation in the table includes a switch generated by the flow table and the communication IP pair [SIP, DIP]. Then, a communication unidirectional flow table in the original table is converted into a bidirectional flow table, as shown in Table 9 and Table 10.

**Table 9**

| Src ID | 0 | 1 | 2 | 3 | 4 | 5 | 7 | 9 |
|--------|----|----|----|----|----|----|----|----|
| Dst ID | 14 | 8 | 31 | 6 | 12 | 24 | 23 | 18 |

**Table 10**

| Src ID | 10 | 11 | 15 | 16 | 17 | 20 | 21 | 26 |
|--------|----|----|----|----|----|----|----|----|
| Dst ID | 25 | 13 | 30 | 19 | 28 | 27 | 22 | 29 |

In addition, the global optimal path allocation algorithm is to perform iterative computation in the Dtor dimension. Therefore, in step 4072, the original bidirectional flow table is converted into the Dtor-Stor mapping matrix, as shown in Table 11.

**Table 11**

| Convert a communication relationship into a Dtor-Stor mapping matrix | | | | | | | | |
|------|---|---|---|---|----|----|---|---|
| Dtor | 0 | 1 | 2 | 3 | 4 | 5 | 6 | 7 |
| Stor | 1 | 0 | 0 | 0 | 2 | 1 | 1 | 0 |
|      | 2 | 3 | 3 | 1 | 7 | 6 | 2 | 3 |
|      | 3 | 5 | 4 | 2 | -1 | -1 | 5 | 4 |
|      | 7 | 6 | 6 | 7 | -1 | -1 | 7 | 6 |

In step 4071 and step 4072, the original communication relationship table is first converted into the Dtor-SIP mapping matrix, and then the Stor at which the SIP is located is found in the flow table generation switching device entry in the original table. Therefore, the original communication relationship table is finally converted into a Dtor-Stor mapping relationship matrix. A core of the global optimal path allocation algorithm is to compute the Dtor-Stor mapping relationship matrix.

It may be understood that the Dtor-Stor mapping matrix shown in Table 11 is an implementation example of the first mapping relationship in step S303.

The following describes step 4073, step 4074, and step 4075 by using some implementation examples.

In step 4073, the Dtor-Stor mapping matrix and an available port matrix of the ToR need to be initialized. Specifically, the first network device converts the aggregated original flow table into the Dtor-Stor mapping matrix, as shown in Table 11. In the Dtor-Stor mapping matrix, a column represents the Dtor (Dtor), and a row represents a number of an egress port that is on the Stor and that is of a flow to the Dtor. An entry in the matrix represents a Stor (Stor) corresponding to a flow of a Dtor (Dtor) corresponding to a column at which the entry is located. In addition, an entry "-1" in the Dtor-Stor mapping matrix represents a flow that only passes through a local ToR. In addition, two operations need to be performed in an initialization stage. A first operation is to convert the original flow table into the Dtor-Stor mapping relationship matrix. A second step is to generate an available egress port matrix of the ToR, as shown in Table 12.

**Table 12**

| Available port table | | | | | | | | |
|----------|---|---|---|---|---|---|---|---|
| ToR      | 0 | 1 | 2 | 3 | 4 | 5 | 6 | 7 |
| Port No. |   |   |   |   |   |   |   |   |
|          |   |   |   |   |   |   |   |   |
|          |   |   |   |   |   |   |   |   |
|          |   |   |   |   |   |   |   |   |

In Table 12, a column of the matrix is defined as a ToR number. A row is defined as an alternative egress port number when a flow passes through each ToR. An entire optimal path computation stage is computing the Dtor-Stor mapping matrix and the available egress port matrix of the ToR.

The flow-based load balancing mentioned above may have a risk of the global conflict. Conditions of forming the global conflict are: Different flows pass through different Stors, flow to a node in a same ToR, and select a same spine as a relay. Therefore, when the Dtor-Stor mapping matrix is processed, if a requirement of Formula 1 is met, it can be ensured that the global conflict problem is avoided:

$$\sum_{k=1}^{N} x(i,j,k) = 1, \sum_{i=1}^{N} x(i,j,k) = 1, \text{ and } \sum_{j=1}^{N} x(i,j,k) = 1; \text{ (Formula 1)}.$$

In Formula 1, x represents the Dtor-Stor mapping relationship matrix, i represents a row corner mark of the matrix, j represents a column corner mark of the matrix, and k represents an element that is of the matrix and that corresponds to a cell (i, j). To ensure that an equation is true, corresponding elements are mutually exclusive in the rows and columns of the matrix, which is also referred to as that the elements are unique in row space and column space. There is no overlapping link for flows on a corresponding network, that is, no local conflict problem and global conflict problem occurs, so that a path of each flow is optimally allocated.

In step 4073, after initializing an algorithm input data structure, the first network device computes a flow matrix based on an FMA algorithm. The FMA algorithm is for performing iterative computation in the Dtor dimension of the flow matrix, that is, traverses all columns in the Dtor-Stor mapping matrix. The algorithm selects a traversal sequence by using a negative effect value, that is, a value of an NEV indicator, of each column. The NEV is defined as a total quantity of entries that appear minus 1, as shown in Table 13.

**Table 13**

| Guide a Dtor traversal sequence by using a negative effect value | | | | | | | | |
|---|---|---|---|---|---|---|---|---|
| Negative effect | 3 | 3 | 3 | 3 | 3 | 3 | | |
| Dtor | 0 | 1 | 2 | 3 | 6 | 7 | 4 | 5 |
| Stor | 1 | 0 | 0 | 0 | 1 | 0 | 2 | 1 |
| | 2 | 3 | 3 | 1 | 2 | 3 | 7 | 6 |
| | 3 | 5 | 4 | 2 | 5 | 4 | -1 | -1 |
| | 7 | 6 | 6 | 7 | 7 | 6 | -1 | -1 |

In Table 13, when a flow is selected for performing computation and allocation on an egress port on the Stor, under a constraint of ensuring that there is no conflict between flows, other flows with same Dtors are affected by a computation result of a 1st flow, and computation and allocation are passively performed on egress ports of other numbers of respective Stors. A value of impact of computation and allocation of a flow on a computation result of another flow is the negative effect value. According to a definition of the NEV indicator, NEV computation is performed on columns of a to-be-computed flow matrix before each round of iteration of Dtor traversal.

For example, Table 13 provides computation before a 1st round of iteration. Except a Dtor-4 and a Dtor-5, all elements in the Dtor column are four non-repeated values. According to the definition of the NEV, the negative effect value is 4-1, that is, 3. When NEV values are the same, a minimum value is selected in columns in a current iteration periodicity based on a natural order of Dtors to enter the current iteration periodicity. When the NEV values are different, for example, a Dtor-0 is selected for computation in a 1st iteration periodicity, elements are 1, 2, 3, and 7. Before computation in a 2nd iteration periodicity is performed, an NEV value of a Dtor-1 is 7-1, that is, 6. An NEV value of a Dtor-3 is 5-1, that is, 4. The NEV value of the Dtor-3 is less than the value of the Dtor-1, and is also a smallest value in all to-be-traversed Dtor columns. In this case, based on a constraint of a traversal sequence, the Dtor-3 enters iterative computation with a 2nd priority. In this manner, certainty of the algorithm can be ensured. It can be learned from Table 13 that NEV computation is not performed for the Dtor-4 and the Dtor-5 when the current iteration periodicity starts. A reason is that the two Dtors have local flows. This causes flows that flow out from a local switching device to be less than a quantity of egress ports. Table 13 is used as an example. Only two flows of each of the Dtor-4 and the Dtor-5 need to be computed and allocated on respective four egress ports. A total quantity of allocation manners is 12. As a result, the certainty of the algorithm and correctness of subsequent iterative computation are seriously affected, and even an optimal solution in a subsequent iteration cannot be obtained through computation. Therefore, a traversal sequence of a Dtor having local flows needs to be at the rear. Based on the FMA algorithm, traversal and an iteration are performed on all Dtors according to the method.

In step 4074 and step 4075, the first network device guides allocation of ToR ports by using a degree of freedom value. Specifically, after a Dtor of a current iteration is selected by using the NEV, egress port numbers of a Stor need to be computed and allocated to different flows of a same Dtor in the iteration, as shown in Table 14.

**Table 14**

| Guide an allocation sequence of Stors by using a degree of freedom | | | | | | |
|---|---|---|---|---|---|---|
| Degree of freedom 1 | 3 | 3 | 3 | 3 | | |
| Stor | 1 | 2 | 3 | 7 | | |
| Port No. | X | | | | 4 | Degree of freedom 2 |
| | | X | | | 4 | |
| | | | X | | 4 | |
| | | | | X | 4 | |

In Table 14, a Dtor of a 1st round of iteration is selected as a Dtor-0 according to the method described in Table 13, and elements of the Dtor-0 include flows from Stors 1, 2, 3, and 7. In a current iteration periodicity, flows on egress ports on Stors are computed and allocated based on a vertical degree of freedom value, that is VDOF, and HDOF.

For example, an implementation process in which a VDOF indicator and an HDOF indicator guide a row computation and allocation sequence of the flow matrix is shown as follows. The HDOF is defined as a total quantity of available egress ports with same numbers in a submatrix in the round of iterative computation. The algorithm specifies that computation and allocation are performed in ascending order of HDOF values. For example, if the HDOF values are the same, computation and allocation are performed in ascending order in a natural order. As shown in Table 14, in an initialization phase, egress ports on all ToRs are in a to-be-computed and to-be-allocated state. Therefore, a submatrix that is in the 1st round of iteration and that includes four ToRs, egress ports with same numbers are available, and all HDOF values are 4. In an iteration process of traversing a Dtor, a flowlet matrix formed by each round of iteration is extremely random. Computation and allocation of egress ports on ToRs are performed based on a constraint of the HDOF value. This can ensure that an optimal solution can be obtained through computation in each iteration periodicity. The other indicator is the VDOF. The VDOF is defined as a quantity of egress ports on a corresponding ToR that can be selected after the round of iterative computation. The algorithm specifies that computation and allocation are performed in ascending order of VDOF values. For example, if the VDOF values are the same, computation and allocation are performed in ascending order in a natural order. As shown in Table 14, in the current iteration periodicity, for flows with Dtors of 0, one port needs to be separately selected from the egress ports on the Stor. Currently, a quantity of ports on each Stor that can be selected and that are initialized is 4. Therefore, after computation and allocation in the current periodicity end, in a current flowlet matrix, a quantity of ports on each Stor that can be selected is 4-1, that is, 3. Therefore, in the current iteration periodicity, computation and allocation of ports need to be performed in a natural order of ToRs. In Table 14, blocks marked with a symbol "x" represent computation and allocation results of several flows of a Dtor-0 on the egress ports on the Stors in the round of iteration.

It may be understood that an implementation process in any one of Table 12 to Table 14 is an implementation example of the third mapping relationship in step S303.

It can be learned from the implementation processes of step 4073 to step 4075 that, according to a computation rule of the FMA algorithm, an entire computation process of the global optimal path allocation algorithm is completed based on three indicator values and in four dimensions. In addition to processing computation of the three indicators in dimensions of the three indicators, historical computation results in a time dimension are considered, to ensure maximum certainty of allocation in the iteration and ensure that the optimal solution can be continuously obtained through computation in a subsequent iteration process until an iteration ends. A global optimal path allocation result may be obtained through computation by traversing all Dtors according to the foregoing iteration rule, as shown in Table 15.

**Table 15**

| Optimal path computation result | | | | | | | | |
|---|---|---|---|---|---|---|---|---|
| Dtor | 0 | 1 | 2 | 3 | 6 | 7 | 4 | 5 |
| Stor | 1 | 0 | 3 | 2 | 7 | 6 | -1 | -1 |
| | 2 | 3 | 0 | 1 | 5 | 4 | 7 | 6 |
| | 3 | 6 | 4 | 7 | 1 | 0 | 2 | -1 |
| | 7 | 5 | 6 | 0 | 2 | 3 | -1 | 1 |

It may be understood that the global optimal path allocation result shown in Table 15 is an implementation example of the second mapping relationship in step S303.

It may be understood that as described above, in the global optimal path allocation algorithm, traversal computation needs to be performed on the flow matrix in respective dimensions based on three indicator values. Therefore, time complexity is O(n3), where n is a quantity of switch ports. The computation result may be used to verify rows and columns of a flow matrix through traversal according to a flow non-crossing determination rule. Therefore, time complexity of a verification result is O(n2), where n is a quantity of switch ports.

Then, the first network device records the optimal path allocation result obtained through computation into an original flow table, as shown in Table 16.

**Table 16**

| Flow number | Flow table generation switch | SIP | DIP | First packet time (μs) | Quantity of bytes | Egress port on a Stor |
|---|---|---|---|---|---|---|
| 1 | T0 | 0 | 14 | 1.0 | xx | P2 |
| 2 | T0 | 1 | 8 | 1.0 | xx | P1 |
| 3 | T0 | 2 | 31 | 1.0 | xx | P3 |
| 4 | T0 | 3 | 6 | 1.0 | xx | P0 |
| 5 | T1 | 4 | 12 | 1.0 | xx | P1 |
| 6 | T1 | 5 | 24 | 1.0 | xx | P2 |
| 7 | T1 | 6 | 3 | 1.0 | xx | P0 |
| 8 | T1 | 7 | 23 | 1.0 | xx | P3 |
| 9 | T2 | 8 | 1 | 1.0 | xx | P1 |
| 10 | T2 | 9 | 18 | 1.0 | xx | P2 |
| 11 | T2 | 10 | 25 | 1.0 | xx | P3 |
| 12 | T2 | 11 | 13 | 1.0 | xx | P0 |
| 13 | T3 | 12 | 4 | 1.0 | xx | P1 |
| 14 | T3 | 13 | 11 | 1.0 | xx | P0 |
| 15 | T3 | 14 | 0 | 1.0 | xx | P3 |
| 16 | T3 | 15 | 30 | 1.0 | xx | P2 |
| 17 | T4 | 16 | 19 | 1.0 | xx | -1 |
| 18 | T4 | 17 | 28 | 1.0 | xx | P1 |
| 19 | T4 | 18 | 9 | 1.0 | xx | P2 |
| 20 | T4 | 19 | 16 | 1.0 | xx | -1 |
| 21 | T5 | 20 | 27 | 1.0 | xx | P1 |
| 22 | T5 | 21 | 22 | 1.0 | xx | -1 |
| 23 | T5 | 22 | 21 | 1.0 | xx | -1 |
| 24 | T5 | 23 | 7 | 1.0 | xx | P3 |
| 25 | T6 | 24 | 5 | 1.0 | xx | P2 |
| 26 | T6 | 25 | 10 | 1.0 | xx | P3 |
| 27 | T6 | 26 | 29 | 1.0 | xx | P0 |
| 28 | T6 | 27 | 20 | 1.0 | xx | P1 |
| 29 | T7 | 28 | 17 | 1.0 | xx | P1 |
| 30 | T7 | 29 | 26 | 1.0 | xx | P0 |
| 31 | T7 | 30 | 15 | 1.0 | xx | P3 |
| 32 | T7 | 31 | 2 | 1.0 | xx | P2 |

It can be learned from Table 16 that a key output, that is, a next hop of the Stor, of path planning may be obtained through flow path orchestration and computation. An output computation result matrix may be converted into a path planning table related to the egress port on the Stor. In addition, the result is synchronized to an edge switching device of a network, to guide selection, for a flow, an egress port corresponding to a next hop of an edge switching node, to complete a global path allocation procedure.

In conclusion, a core innovation point of embodiments of this application lies in a multi-layer network system including the N second network devices and the P third network devices. After obtaining the communication relationship and the topology information, the first network device performs optimization computation based on aggregated communication relationship information and the network topology information by using the global optimal path allocation algorithm. The first network device sends an optimal result obtained through computation to the N second network devices. Finally, the N second network devices perform path selection by using the received optimal computation result as a local flow path allocation guide, to implement the load balancing and control the network congestion. Therefore, when the N second network devices perform service packet forwarding, optimal paths are obtained through computation for all flows based on the global optimal path allocation algorithm, to perform one-hop convergence, without performing, on a local single device, path selection through computation according to the hash function. This resolves the local conflict problem in a flow-based multi-path load balancing method and the global conflict problem caused by a local decision mechanism. Service packet forwarding paths with fixed communication relationships are consistent. This resolves the packet disorder problem in a packet-based multi-path load balancing method.

Optionally, the N second network devices obtain flow communication relationship information for entering the network, including the source IP, the destination IP, and the first packet time. The N second network devices obtain the local topology information, and aggregates the obtained local flow communication relationship information and the obtained topology information to the first network device.

Optionally, the first network device combines the aggregated communication relationship information and the aggregated topology information that are of the edge switching node into a network flow information table. The network information table records the topology information and the communication relationship of at least one edge node. In addition, the network information table serves as an input of a global optimal path allocation algorithm. A column of the network information table is mapping from a flow destination edge switching node to all source switching nodes to the destination edge switching node. A row of the network information table represents an egress port number of a to-be-allocated source switching node.

Optionally, the first network device obtains a network flow path allocation table through computation based on the global optimal path allocation algorithm and outputting. The network flow path allocation table includes network path allocation information of flows in the N second network devices. A column of the network path allocation table is mapping from a flow destination edge switching node to all source switching nodes to the destination edge switching node. A row of the network path allocation table represents an egress port allocated, at the source edge node, to a flow to the destination edge node.

Refer to FIG. 8. An embodiment of this application provides a communication apparatus. The communication apparatus 800 can implement functions of the communication apparatus (namely, the first network device or the second network device) in the foregoing method embodiments, and therefore can also implement advantageous effects of the foregoing method embodiments.

When the communication apparatus 800 is configured to implement functions of the foregoing first network device, the communication apparatus includes a transceiver unit 801 and a processing unit 802. The transceiver unit 801 is configured to obtain first topology information, where the first topology information includes connection relationships between N second network devices and P third network devices, any second network device is an upstream network device of any third network device, N is an integer greater than or equal to 2, and P is an integer greater than or equal to 1. The transceiver unit 801 is further configured to obtain communication relationships of M data flows, where a communication relationship of each of the M data flows includes source address information and destination address information, M is an integer greater than or equal to 2, and the M data flows are separately transmitted by the N second network devices to the P third network devices. The processing unit 802 is configured to determine M paths based on the communication relationships of the M data flows and the first topology information, where the M paths respectively correspond to the M data flows, and the M paths indicate paths through which the M data flows are transmitted by the N second network devices to the P third network device. The transceiver unit 801 is further configured to separately send the M paths to the N second network devices.

In a possible implementation, the M data flows are transmitted by the P third network devices to K fourth network devices, where K is an integer greater than or equal to 1. The M data flows include a first data flow and a second data flow, where source address information of the first data flow and source address information of the second data flow correspond to different second network devices and destination address information of the first data flow and destination address information of the second data flow correspond to a same fourth network device; and the M paths include a first path and a second path, where the first path corresponds to the first data flow, the second path corresponds to the second data flow, and the first path and the second path correspond to different third network devices.

In a possible implementation, the M paths further indicate egress ports of the M data flows on the N second network devices.

In a possible implementation, the M data flows include a third data flow and a fourth data flow, where source address information of the third data flow and source address information of the fourth data flow correspond to a same second network device; and the M paths include a third path and a fourth path, where the third path corresponds to the third data flow, the fourth path corresponds to the fourth data flow, and the third path is different from the fourth path.

In a possible implementation, the M data flows are transmitted by the P third network devices to the K fourth network device, where K is a positive integer. The processing unit 802 is specifically configured to: determine a first mapping relationship based on the communication relationships of the M data flows and the first topology information, where the first mapping relationship indicates a mapping relationship between a second network device corresponding to the source address information of each of the M data flows and a fourth network device corresponding to the destination address information of each of the M data flows; and determine the M paths based on the first mapping relationship.

In a possible implementation, the processing unit 802 is specifically configured to: determine first sorting information based on the first mapping relationship, where the first sorting information indicates sorting of a quantity of second network devices corresponding to the K fourth network devices; sequentially traverse the egress ports on the N second network devices based on the first sorting information, to obtain a second mapping relationship, where the second mapping relationship indicates mapping relationships between the egress ports on the N second network devices and the K fourth network devices; and determine the M paths based on the second mapping relationship.

In a possible implementation, the processing unit 802 is specifically configured to: sequentially traverse the egress ports on the N second network devices based on the first sorting information, to obtain a third mapping relationship, where the third mapping relationship indicates an optional quantity of egress ports on the second network device corresponding to each fourth network device; and determine the second mapping relationship based on the third mapping relationship.

In a possible implementation, the transceiver unit 801 is further configured to obtain second topology information, where the second topology information includes connection relationships between A second network devices and the P third network devices, at least one of the A second network devices is the same as at least one of the N second network devices, and A is an integer greater than or equal to 1. The transceiver unit 801 is further configured to obtain communication relationships of B data flows, where a communication relationship of each of the B data flows includes source address information and destination address information, and B is an integer greater than or equal to 1; and the B data flows are separately transmitted by the A second network devices to the P third network devices. The processing unit 802 is further configured to determine B paths based on the communication relationship of the B data flows and the topology information, where the B paths respectively correspond to the B data flows, the B paths indicate paths through which the M data flows are sent by the A second network devices to the P third network devices, where egress ports that are on a second network device and that correspond to the B paths are different from egress ports that are on a second network device and that correspond to the M paths. The transceiver unit 801 is further configured to separately send the B paths to the A second network devices.

In a possible implementation, the transceiver unit 801 is specifically configured to separately receive communication relationships that are of the M data flows and that are from the N second network devices.

In a possible implementation, the M data flows correspond to one of a plurality of artificial intelligence AI set communication tasks.

In a possible implementation, the first network device is a controller or one of the P third network devices.

When the communication apparatus 800 is configured to implement functions of the foregoing second network device, the apparatus includes a transceiver unit 801 and a processing unit 802. The processing unit 802 is configured to determine communication relationships of Q data flows, where a communication relationship of each of the Q data flows includes source address information and destination address information, and Q is an integer greater than or equal to 1. The transceiver unit 801 is configured to send the communication relationships of the Q data flows to a first network device. The transceiver unit 801 is further configured to receive Q paths from the first network device, where the Q paths indicate paths used when the second network device transmits the Q data flows. The transceiver unit 801 is further configured to transmit the Q data flows based on the Q paths.

In a possible implementation, path information further indicates egress ports that are on the second network device and that are of the Q data flows.

In a possible implementation, the Q data flows include a third data flow and a fourth data flow, where source address information of the third data flow and source address information of the fourth data flow correspond to the second network device; and the path information includes a third path and a fourth path, where the third path corresponds to the third data flow, the fourth path corresponds to the fourth data flow, and the third path is different from the fourth path.

In a possible implementation, the Q data flows correspond to one of a plurality of artificial intelligence AI set communication tasks.

It should be noted that for specific content such as an information execution process of each unit of the communication apparatus 800, refer to descriptions in the foregoing method embodiments of this application. Details are not described herein again.

An embodiment of this application further provides a communication apparatus 900. FIG. 9 is a schematic diagram of a structure of the communication apparatus 900 according to the embodiment of this application.

Optionally, the communication apparatus 900 performs functions of the first network device in FIG. 3 and a related embodiment. A communication apparatus 1000 performs functions of the second network device in FIG. 3 and a related embodiment.

Optionally, the communication apparatus 900 performs the functions of the second network device in FIG. 3 and the related embodiment. The communication apparatus 1000 performs the functions of the first network device in FIG. 3 and the related embodiment.

The communication apparatus 900 shown in FIG. 9 includes a memory 902 and at least one processor 901.

Optionally, the processor 901 implements the method in the foregoing embodiments by reading instructions stored in the memory 902, or the processor 901 may implement the method in the foregoing embodiments according to instructions stored inside. When the processor 901 implements the method in the foregoing embodiments by reading the instructions stored in the memory 902, the memory 902 stores the instructions for implementing the method provided in the foregoing embodiments of this application.

Optionally, the at least one processor 901 is one or more CPUs or a single-core CPU, or may be a multi-core CPU.

Further optionally, the at least one processor 901 may be further configured to perform an implementation process corresponding to a processing unit 602 in the embodiment shown in FIG. 6, and implement a corresponding advantageous effect. Details are not described herein again.

The memory 902 includes but is not limited to a RAM, a ROM, an EPROM, a flash memory, an optical memory, or the like. The memory 902 stores instructions of an operating system.

After program instructions stored in the memory 902 are read by the at least one processor 901, the communication apparatus performs a corresponding operation in the foregoing embodiments.

Optionally, the communication apparatus shown in FIG. 9 further includes a network interface 903. The network interface 903 may be a wired interface, for example, an FDDI or a GE interface. Alternatively, the network interface 903 may be a wireless interface. The network interface 903 is configured to receive and send data in FIG. 3 and a related embodiment.

Further optionally, the network interface 903 may be further configured to perform an implementation process corresponding to a transceiver unit 601 in the embodiment shown in FIG. 6, and implement a corresponding advantageous effect. Details are not described herein again.

It should be understood that the network interface 903 has functions of receiving data and sending data. The functions of "receiving data" and "sending data" may be integrated into a same transceiver interface for implementation, or the functions of "receiving data" and the "sending data" may be respectively implemented in different interfaces. This is not limited herein. In other words, the network interface 903 may include one or more interfaces, configured to implement the functions of "receiving data" and "sending data".

For another function that can be performed by the communication apparatus 900 after the processor 901 reads program instructions in the memory 902, refer to the descriptions in the foregoing method embodiments.

Optionally, the communication apparatus 900 further includes a bus 904. The processor 901 and the memory 902 are usually connected to each other through the bus 904, or may be connected to each other in another manner.

Optionally, the communication apparatus 900 further includes an input/output interface 905. The input/output interface 905 is configured to: be connected to an input device, and receive related configuration information that is input by a user or another device via the input device that can interact with the communication apparatus 900. The input device includes but is not limited to a keyboard, a touchscreen, a microphone, and the like.

The communication apparatus 900 provided in this embodiment of this application is configured to: perform the method performed by the communication apparatus (the first network device) provided in the foregoing method embodiments, and implement corresponding advantageous effects.

For example, when the communication apparatus 900 performs the functions of the first network device in FIG. 3 and the related embodiment, the communication apparatus 900 obtains first topology information including connection relationships between N communication apparatuses 1000 and P third network devices, and after obtaining communication relationships of M data flows, the communication apparatus 900 determines M paths based on the communication relationships of the M data flows and the first topology information, and sends the M paths to the N communication apparatuses 1000. Then, the N communication apparatuses 1000 may separately send the M data flows to the P third network devices based on the M paths. In other words, serving as a device for determining a path, the communication apparatus 900 can determine the M paths corresponding to the M data flows transmitted between the N communication apparatuses 1000 and the P third network devices. Therefore, the communication apparatus 900 can determine the path based on global information, to avoid a path conflict and improve data flow forwarding efficiency.

For another example, when the communication apparatus 900 performs the functions of the second network device in FIG. 3 and the related embodiment, after sending communication relationships of Q data flows to the communication apparatus 1000, the communication apparatus 900 receives Q paths that are used when the communication apparatus 900 is indicated to transmit the Q data flows and that are from the communication apparatus 1000, and transmits the Q data flows based on the Q paths. In other words, serving as a device for determining a path, the communication apparatus 1000 can determine M paths corresponding to M data flows transmitted between N communication apparatuses 900 and the P third network devices. Therefore, the communication apparatus 1000 can determine the path based on global information, to avoid a path conflict and improve data flow forwarding efficiency.

For specific implementations of the communication apparatuses shown in FIG. 9, refer to the descriptions in the foregoing method embodiments. Details are not described herein again.

An embodiment of this application further provides a communication system. The communication system includes at least a first network device and N second network devices.

Optionally, the communication system further includes P third network devices.

Optionally, the communication system further includes K fourth network devices.

It should be understood that in the communication system, each network device may further apply another method in the foregoing embodiments, and implement corresponding technical effects. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not cause the essence of the corresponding technical solutions to depart from the scope of the technical solutions of embodiments of this application.

## Claims

1. A path determining method, comprising:

   obtaining, by a first network device, first topology information, wherein the first topology information comprises connection relationships between N second network devices and P third network devices, any second network device is an upstream network device of any third network device, N is an integer greater than or equal to 2, and P is an integer greater than or equal to 1;
   obtaining, by the first network device, communication relationships of M data flows, wherein a communication relationship of each of the M data flows comprises source address information and destination address information, M is an integer greater than or equal to 2, and the M data flows are separately transmitted by the N second network devices to the P third network devices;
   determining, by the first network device, M paths based on the communication relationships of the M data flows and the first topology information, wherein the M paths respectively correspond to the M data flows, and the M paths indicate paths through which the M data flows are transmitted by the N second network devices to the P third network devices; and
   separately sending, by the first network device, the M paths to the N second network devices.

2. The method according to claim 1, wherein the M data flows are transmitted by the P third network devices to K fourth network devices, wherein K is an integer greater than or equal to 1; and
   the M data flows comprise a first data flow and a second data flow, wherein source address information of the first data flow and source address information of the second data flow correspond to different second network devices, and destination address information of the first data flow and destination address information of the second data flow correspond to a same fourth network device; and the M paths comprise a first path and a second path, wherein the first path corresponds to the first data flow, the second path corresponds to the second data flow, and the first path and the second path correspond to different third network devices.

3. The method according to claim 1 or 2, wherein the M paths further indicate egress ports of the M data flows on the N second network devices.

4. The method according to any one of claims 1 to 3, wherein the M data flows are transmitted by the P third network devices to the K fourth network devices, wherein K is a positive integer; and the determining, by the first network device, M paths based on the communication relationships of the M data flows and the first topology information comprises:

   determining, by the first network device, a first mapping relationship based on the communication relationships of the M data flows and the first topology information, wherein the first mapping relationship indicates a mapping relationship between a second network device corresponding to the source address information of each of the M data flows and a fourth network device corresponding to the destination address information of each of the M data flows; and
   determining, by the first network device, the M paths based on the first mapping relationship.

5. The method according to claim 4, wherein the determining, by the first network device, the M paths based on the first mapping relationship comprises:

   determining, by the first network device, first sorting information based on the first mapping relationship, wherein the first sorting information indicates sorting of a quantity of second network devices corresponding to the K fourth network devices;
   sequentially traversing, by the first network device, the egress ports on the N second network devices based on the first sorting information, to obtain a second mapping relationship, wherein the second mapping relationship indicates mapping relationships between the egress ports on the N second network devices and the K fourth network devices; and
   determining, by the first network device, the M paths based on the second mapping relationship.

6. The method according to claim 5, wherein the sequentially traversing, by the first network device, the egress ports on the N second network devices based on the first sorting information, to obtain a second mapping relationship comprises:

   sequentially traversing, by the first network device, the egress ports on the N second network devices based on the first sorting information, to obtain a third mapping relationship, wherein the third mapping relationship indicates an optional quantity of egress ports on the second network device corresponding to each fourth network device; and
   determining, by the first network device, the second mapping relationship based on the third mapping relationship.

7. The method according to any one of claims 1 to 6, wherein the obtaining, by the first network device, communication relationships of M data flows comprises:
   separately receiving, by the first network device, the communication relationships of the M data flows from the N second network devices.

8. The method according to any one of claims 1 to 7, wherein
   the M data flows correspond to one of a plurality of artificial intelligence AI set communication tasks.

9. The method according to any one of claims 1 to 8, wherein
   the first network device is a controller or one of the P third network devices.

10. A path determining method, comprising:

    sending, by a second network device, communication relationships of Q data flows to a first network device, wherein a communication relationship of each of the Q data flows comprises source address information and destination address information, and Q is an integer greater than or equal to 1;
    receiving, by the second network device, Q paths from the first network device, wherein the Q paths indicate paths used when the second network device transmits the Q data flows; and

transmitting, by the second network device, the Q data flows based on the Q paths.

11. The method according to claim 10, wherein path information further indicates egress ports of the Q data flows on the second network device.

12. The method according to claim 10 or 11, wherein
one or more data flows correspond to one of a plurality of artificial intelligence AI set communication tasks.

13. A communication apparatus, comprising a transceiver unit and a processing unit, wherein the transceiver unit is configured to obtain first topology information, wherein the first topology information comprises connection relationships between N second network devices and P third network devices, any second network device is an upstream network device of any third network device, N is an integer greater than or equal to 2, and P is an integer greater than or equal to 1;

the transceiver unit is further configured to obtain communication relationships of M data flows, wherein a communication relationship of each of the M data flows comprises source address information and destination address information, M is an integer greater than or equal to 2, and the M data flows are separately transmitted by the N second network devices to the P third network devices;
the processing unit is configured to determine M paths based on the communication relationships of the M data flows and the first topology information, wherein the M paths respectively correspond to the M data flows, and the M paths indicate paths through which the M data flows are transmitted by the N second network devices to the P third network devices; and
the transceiver unit is further configured to separately send the M paths to the N second network devices.

14. The apparatus according to claim 13, wherein the M data flows are transmitted by the P third network devices to K fourth network devices, wherein K is an integer greater than or equal to 1; and
the M data flows comprise a first data flow and a second data flow, wherein source address information of the first data flow and source address information of the second data flow correspond to different second network devices, and destination address information of the first data flow and destination address information of the second data flow correspond to a same fourth network device; and the M paths comprise a first path and a second path, wherein the first path corresponds to the first data flow, the second path corresponds to the second data flow, and the first path and the second path correspond to different third network devices.

15. The apparatus according to claim 13 or 14, wherein the M paths further indicate egress ports of the M data flows on the N second network devices.

16. The apparatus according to any one of claims 13 to 15, wherein the M data flows are transmitted by the P third network devices to the K fourth network devices, wherein K is a positive integer; and the processing unit is specifically configured to:

determine a first mapping relationship based on the communication relationships of the M data flows and the first topology information, wherein the first mapping relationship indicates a mapping relationship between a second network device corresponding to the source address information of each of the M data flows and a fourth network device corresponding to the destination address information of each of the M data flows; and
determine the M paths based on the first mapping relationship.

17. The apparatus according to claim 16, wherein the processing unit is specifically configured to:

determine first sorting information based on the first mapping relationship, wherein the first sorting information indicates sorting of a quantity of second network devices corresponding to the K fourth network devices;
sequentially traverse the egress ports on the N second network devices based on the first sorting information, to obtain a second mapping relationship, wherein the second mapping relationship indicates mapping relationships between the egress ports on the N second network devices and the K fourth network devices; and
determine the M paths based on the second mapping relationship.

18. The apparatus according to claim 17, wherein the processing unit is specifically configured to:

sequentially traverse the egress ports on the N second network devices based on the first sorting information, to obtain a third mapping relationship, wherein the third mapping relationship indicates an optional quantity of egress ports on the second network device corresponding to each fourth network device; and

determine the second mapping relationship based on the third mapping relationship.

19. The apparatus according to any one of claims 13 to 18, wherein the transceiver unit is specifically configured to separately receive the communication relationships of the M data flows from the N second network devices.

20. The apparatus according to any one of claims 13 to 19, wherein
the M data flows correspond to one of a plurality of artificial intelligence AI set communication tasks.

21. The apparatus according to any one of claims 13 to 20, wherein
the first network device is a controller or one of the P third network devices.

22. A communication apparatus, comprising a transceiver unit and a processing unit, wherein

the processing unit is configured to determine communication relationships of Q data flows, wherein a communication relationship of each of the Q data flows comprises source address information and destination address information, and Q is an integer greater than or equal to 1;
the transceiver unit is configured to send the communication relationships of the Q data flows to a first network device;
the transceiver unit is further configured to receive Q paths from the first network device, wherein the Q paths indicate paths used when a second network device transmits the Q data flows; and
the transceiver unit is further configured to transmit the Q data flows based on the Q paths.

23. The apparatus according to claim 22, wherein path information further indicates egress ports of the Q data flows on the second network device.

24. The apparatus according to claim 22 or 23, wherein
one or more data flows correspond to one of a plurality of artificial intelligence AI set communication tasks.

25. A communication apparatus, comprising at least one processor, wherein the at least one processor is coupled to a memory, wherein

the memory is configured to store a program or instructions; and
the at least one processor is configured to execute the program or the instructions, to enable the communication apparatus to implement the method according to any one of claims 1 to 9 or the method according to any one of claims 10 to 12.

26. A computer-readable storage medium, wherein the medium stores instructions, and when the instructions are executed by a processor, the method according to any one of claims 1 to 12 is implemented.

27. A computer program product, comprising instructions, wherein when the instructions are run on a processor, the method according to any one of claims 1 to 12 is implemented.

28. A communication system, wherein the communication system comprises a first network device and N second network devices, wherein the first network device is configured to perform the method according to any one of claims 1 to 9, and the second network device is configured to perform the method according to any one of claims 10 to 12.

FIG. 1a

FIG. 1b

Third
network
device (1)

...

Third
network
device (P)

Second
network
device (1)

...

Second
network
device (N)

Fourth
network
device (1)

...

Fourth
network
device (K)

FIG. 1c

Third
network
device (1)

...

Third
network
device (P)

Second network
device (1)
Fourth network
device (1)

Second network
device (2)
Fourth network
device (2)

...

Second network
device (N)
Fourth network
device (K)

FIG. 1d

Spine

Leaf

...

...

Server

FIG. 1e

FIG. 1f

FIG. 2a

FIG. 2b

FIG. 2c

FIG. 2d

FIG. 2e

—— Data flow 1 ➤

Server-A · Switch-A · Switch-1 · Switch-C · Server-C

—— Data flow 2 ➤

Server-B · Switch-B · Switch-2 · Server-D

FIG. 2f

———— Data flow 1 ————➤

Data flow 1-2 ➤ · Data flow 1-1 ➤

Server-A · Switch-A · Switch-1 · Switch-C

Server-B · Data flow 2-1 ➤ · Switch-2

Data flow 2

FIG. 2g

```
┌─────────────────┐                              ┌─────────────────┐
│  First network  │                              │    N second     │
│     device      │                              │ network devices │
└────────┬────────┘                              └────────┬────────┘
         │                                                │
┌────────┴──────────────────────────┐                     │
│ S301: Obtain first topology information │                 │
└────────┬──────────────────────────┘                     │
         │                                                │
┌────────┴──────────────────────────┐                     │
│   S302: Obtain communication       │                     │
│   relationships of M data flows    │                     │
└────────┬──────────────────────────┘                     │
         │                                                │
┌────────┴──────────────────────────┐                     │
│ S303: Determine M paths based on the │                   │
│ communication relationships of the M │                   │
│   data flows and the first topology  │                   │
│            information               │                   │
└────────┬──────────────────────────┘                     │
         │         S304: M paths                           │
         │────────────────────────────────────────────────▶│
         │                                                │
```

FIG. 3

EP 4 557 688 A1

401: Establish a flow table for a local elephant flow and aggregate a communication relationship

↓

402: Obtain local topology information and aggregate topology information of a complete task

↓

403: Determine whether all nodes are covered

404: Allocate a resource by task based on the communication relationship

405: Deduce all tasks and all communication relationships based on an aggregation flow table

↓

TO FIG. 4a-2

---

4041: Input the communication relationship

↓

4042: Establish a Dtor-Stor mapping matrix based on the communication relationship and the topology information

↓

4043: Perform traversal and allocation in descending order of quantities of occurrences of ToRs

↓

4044: Allocate a link resource in a sequence of Dtor uplink ports

↓

4045: Determine whether all Dtors are traversed — N

Y

4046: Determine whether there is another communication relationship to be allocated with the resource — N

Y

4047: Resource allocation ends

FIG. 4a-1

CONT. FROM FIG. 4a-1

Ring algorithm

Tree algorithm

H-D algorithm

4061: AI set communication

4062: Steady-state flow communication

406: Recognize the communication relationship

407: Perform global optimal path computation by task

408: A global computing node delivers an optimal computation result

409: An edge computing node guides path selection based on the result

4071: Input communication relationship

4072: Establish the Dtor-Stor mapping matrix based on the communication relationship and the topology information

4073: Traverse a flow matrix in a Dtor dimension, and guide a matrix column iteration sequence by using an NEV value

4074: Guide a matrix row computation sequence in an iteration by using an HDOF value and a VDOF value

4075: Determine whether a for loop of traversing the Dtors is completed

N

Y

4076: Optimal allocation result

FIG. 4a-2

EP 4 557 688 A1

FIG. 4b

FIG. 5a

FIG. 5b

Phase 1

Phase 2

...

Phase $\log_2 N$

FIG. 5c

Send    Receive

Receive

Send

8   Send

Send   7

Receive

Send

6   Receive

Receive

Send   5

Send

3

Send

4   Receive

Send

Receive

FIG. 6

FIG. 7

FIG. 8

EP 4 557 688 A1

902

Communication
apparatus 900

901

Processor

Memory

Operating system

Program instructions

904

Network
interface

903

Input/
Output
interface

905

Communication
apparatus 1000

FIG. 9

45

<div align="center">

**INTERNATIONAL SEARCH REPORT**

</div>

| | International application No. |
|---|---|
| | **PCT/CN2023/103818** |

**A. CLASSIFICATION OF SUBJECT MATTER**

H04L45/12(2022.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, VEN, IEEE, 3GPP, CNKI, 百度, BAIDU: 流, 路径, 控制器, 映射, 关联, 对应, 排序, 遍历, 分配, 数量, 端口, 五元组, 周期, 出, 入, 拓扑, 负载均衡, flow, path, controller, map, association, respond, sort, foreach, allocation, number, port, tuple, period, in, out, topology, load balance

**C. DOCUMENTS CONSIDERED TO BE RELEVANT**

| Category* | Citation of document, with indication, where appropriate, of the relevant passages | Relevant to claim No. |
|---|---|---|
| X | CN 105634974 A (HANGZHOU HUAWEI DIGITAL TECHNOLOGY CO., LTD.) 01 June 2016 (2016-06-01)<br>description, paragraph 86-paragraph 98, and figures 1-9 | 1-28 |
| X | CN 107579922 A (BEIJING INFORMATION SCIENCE & TECHNOLOGY UNIVERSITY) 12 January 2018 (2018-01-12)<br>description, paragraph 31-paragraph 75, and figures 1-3 | 1-28 |
| X | US 2018176134 A1 (CISCO TECHNOLOGY INC.) 21 June 2018 (2018-06-21)<br>claims 1-5, and figures 1A-1B and 2-3 | 1-28 |
| A | CN 104767694 A (DALIAN UNIVERSITY OF TECHNOLOGY) 08 July 2015 (2015-07-08)<br>entire document | 1-28 |
| A | CN 104601485 A (TSINGHUA UNIVERSITY) 06 May 2015 (2015-05-06)<br>entire document | 1-28 |
| A | CN 114024969 A (HUAWEI TECHNOLOGIES CO., LTD.) 08 February 2022 (2022-02-08)<br>entire document | 1-28 |

☑ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2023** | **25 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 557 688 A1**

## INTERNATIONAL SEARCH REPORT

| International application No. |
| --- |
| **PCT/CN2023/103818** |

### C. DOCUMENTS CONSIDERED TO BE RELEVANT

| Category* | Citation of document, with indication, where appropriate, of the relevant passages | Relevant to claim No. |
| --- | --- | --- |
| A | US 10630579 B1 (AMAZON TECHNOLOGIES, INC.) 21 April 2020 (2020-04-21) entire document | 1-28 |
| A | WO 2021017578 A1 (HUAWEI TECHNOLOGIES CO., LTD.) 04 February 2021 (2021-02-04) entire document | 1-28 |
| A | US 10148551 B1 (JUNIPER NETWORKS INC.) 04 December 2018 (2018-12-04) entire document | 1-28 |

Form PCT/ISA/210 (second sheet) (July 2022)

# EP 4 557 688 A1

| INTERNATIONAL SEARCH REPORT<br>Information on patent family members | | | | International application No.<br>**PCT/CN2023/103818** | | | |
|---|---|---|---|---|---|---|---|
| Patent document<br>cited in search report | | | Publication date<br>(day/month/year) | Patent family member(s) | | | Publication date<br>(day/month/year) |
| CN | 105634974 | A | 01 June 2016 | CN | 105634974 | B | 01 March 2019 |
| CN | 107579922 | A | 12 January 2018 | CN | 107579922 | B | 24 March 2020 |
| US | 2018176134 | A1 | 21 June 2018 | US | 2019386921 | A1 | 19 December 2019 |
| | | | | US | 10904149 | B2 | 26 January 2021 |
| | | | | US | 10454828 | B2 | 22 October 2019 |
| CN | 104767694 | A | 08 July 2015 | CN | 104767694 | B | 13 October 2017 |
| CN | 104601485 | A | 06 May 2015 | CN | 104601485 | B | 28 August 2018 |
| CN | 114024969 | A | 08 February 2022 | EP | 4164187 | A1 | 12 April 2023 |
| | | | | WO | 2022012145 | A1 | 20 January 2022 |
| | | | | US | 2023164080 | A1 | 25 May 2023 |
| US | 10630579 | B1 | 21 April 2020 | | None | | |
| WO | 2021017578 | A1 | 04 February 2021 | CN | 112311674 | A | 02 February 2021 |
| | | | | CN | 112311674 | B | 25 February 2022 |
| US | 10148551 | B1 | 04 December 2018 | | None | | |

Form PCT/ISA/210 (patent family annex) (July 2022)

**EP 4 557 688 A1**

**Patent documents cited in the description**

- CN 202210891496